# EUROPEAN PATENT SPECIFICATION

(11) **EP 2 967 110 B1**
(45) Date of publication and mention of the grant of the patent: **05.06.2019**
(21) Application number: 14720387.1
(22) Date of filing: 14.03.2014
(51) Int. Cl.: A23G 3/34, A23G 3/54, A23G 4/06, A23G 4/20

(54) **CHEWING GUM SNACKS; AND METHODS OF MAKING THEREOF**
KAUGUMMISNACKS UND VERFAHREN ZUR HERSTELLUNG DAVON
ENCAS DE GOMME À MÂCHER ET PROCÉDÉS DE FABRICATION DE CEUX-CI

(30) Priority: 14.03.2013 US 201361782711 P
(43) Date of publication of application: 20.01.2016
(73) Proprietor: Intercontinental Great Brands LLC, East Hanover, NJ 07936 (US)
(72) Inventor: AMOAKO-POKU, Francis, East Hanover, NJ 07936 (US); PETTIGREW, Susan, East Hanover, NJ 07936 (US); TANCREDI, Doris, East Hanover, NJ 07936 (US); YANG, Zi, East Hanover, NJ 07936 (US); KABSE, Kishor, East Hanover, NJ 07936 (US); UEMINAMI, Atsushi, Takatsu-ku Kanagawa 213-0012 (JP)
(74) Representative: Boult Wade Tennant LLP
(86) International application number: PCT/US2014/028376
(87) International publication number: WO 2014/152952

(56) References cited:
- EP-A1- 1 765 304
- WO-A2-2007/076170
- WO-A2-2011/117638
- US-A1- 2008 166 449
- US-A1- 2010 136 165
- US-A1- 2011 262 588
- Inglett G.E.: "Symposium: sweeteners", 1974 * page 93 *

## Description

### BACKGROUND

Snacking is generally eating foodstuff between regular meals (breakfast, lunch, dinner) typically with a portion size smaller than regular meals. Snack foods are eaten for a variety of reasons involving internal motivations (boredom, tired, stressed, hungry, etc.) and external motivations (special occasions, celebrations, while the kids are snacking, while watching television, socializing, etc.).

Taste is an important factor in snacking with consumers targeting sweet, salty, or savory snacks depending upon their needs.

Certain trends in the selection of snacks have been found depending upon the consumer's emotional needs at the time of snacking:
Hunger - savory snacks;
Content or happy - satisfy a craving with something sweet, quick, inexpensive and will not spoil appetite;
Rushed or busy - quick, easy, readily available and will provide energy;
Boredom - salty foods and/or those with a crunchy texture; and
Stressed - cookies and chocolate.

Chewing gum is popular with consumers for its ability to provide a long lasting chew experience. Traditional chewing gums include the common uncoated, slab and stick formats, hard coated pellet, and gum ball formats. Consumers readily identify such products as chewing gum and not as snacks. Furthermore, chewing traditional chewing gum provides a cohesive chew. By the action of chewing, saliva is created, which is swallowed. However, the experience of chewing traditional chewing gums does not provide the consumer with the feeling of swallowing a food product such as when consuming a snack product.

US2011/262588 discloses sugar free confectionery products, methods of making, and multilayer structures prepared from the confectionery products and chewing gum.

WO2007076170 describes multilayered confectionery products and methods for making same. The confectionery product may comprise at least distinct three confectionery layers, wherein at least one of the confectionery layers has a first texture during processing and a second texture after processing that is different from the first texture. The differences in texture can result from, for example, water or oil migration between adjacent layers.

US2008166449 relates to the confectionery compositions including a saccharide and a chewing gum base.

Altogether, traditional chewing gums are perceived by consumers, visually and texturally, as chewing gum. Consumers also do not find current chewing gums as sufficient to meet their snacking needs.

There remains a need in the art for new chewing gum that can deliver a more satisfying snack-like quality in addition to chewing gum qualities.

### SUMMARY

The present invention relates to a multi-textured chewing gum product, comprising:
a chewing gum composition portion and a confectionery composition portion where a region of the chewing gum composition portion is exposed;
the multi-textured chewing gum product has an initial crunch characteristic determined by a Texture Analyzer Test where there are at least three changes in slope direction in a stress versus probe penetration (%) curve and at least one negative slope that covers a stress range of at least 1, at least 1.5, at least 2, or at least 2.5 million pascals;
wherein the Texture Analyzer Test provides results as stress versus probe penetration (%); and wherein:
   the chewing gum composition comprises 10.0 to 55.0 wt% gum base, 35.0 to 75.0 wt% sugar polyol bulk sweetener, and 2.0 to 15.0 wt% softener based on the total weight of the chewing gum composition, and
   the confectionery composition portion comprises 70.0 to 95.0 wt% bulk sweetener, 3.0 to 14.0 wt% fat, and 2.0 to 14.0 wt% dairy ingredient based on the total weight of the confectionery composition.

In one embodiment the product of a) is in bar or stick format comprising a base layer of confectionery composition (substrate) and one, two or three portions of chewing gum composition positioned on a top surface of the base layer; or a base layer of chewing gum composition (substrate) and one, two or three portions of confectionery composition positioned on a top surface of the base layer.

In another embodiment the multi-textured chewing gum product further comprises a second confectionery composition portion partially covering the confectionery composition portion or the chewing gum composition portion.

In another embodiment the second confectionery composition is in the form of a drizzle or glaze.

In another embodiment the multi-textured chewing gum product comprises:
a first confectionery composition portion, a chewing gum composition portion positioned on a top surface of the first confectionery composition portion, and a second confectionery composition portion in the form of a drizzle over a top surface of the chewing gum composition portion, wherein the multi-textured chewing gum product is in a bar or stick format;
wherein the chewing gum composition comprises 10.0 to 55.0 wt% gum base, 35.0 to 75.0 wt% sugar polyol bulk sweetener, and 2.0 to 15.0 wt% softener based on the total weight of the chewing gum composition;
the first confectionery composition comprises 70.0 to 95.0 wt% bulk sweetener, 3.0 to 14.0 wt% fat, and 2.0 to 14.0 wt% dairy ingredient based on the total weight of the first confectionery composition;
the multi-textured chewing gum product has a weight ratio of chewing gum composition to first confectionery composition of 40:60 to 60:40; and
wherein the first confectionery composition portion fractures when the multi-textured chewing gum product is bent 90 degrees.

There is described a multi-textured chewing gum product, comprising a.) a chewing gum composition portion and a confectionery composition portion where a region of the chewing gum composition portion is exposed; or b.) a first chewing gum composition portion and a second chewing gum composition portion, the first chewing gum composition portion having a different composition and different texture than the second chewing gum composition portion, and where a region of the first or second chewing gum composition portion is exposed; the multi-textured chewing gum product has an initial crunch characteristic determined by a Texture Analyzer Test where there are at least three changes in slope direction in a stress versus probe penetration (%) curve and at least one negative slope that covers a stress range of at least 1, at least 1.5, at least 2, or at least 2.5 million pascals; wherein the Texture Analyzer Test provides results as stress versus probe penetration (%).

There is described a multi-textured chewing gum product, comprising a.) a chewing gum composition portion and a confectionery composition portion; or b.) a first chewing gum composition portion and a second chewing gum composition portion, the first chewing gum composition portion having a different composition and different texture than the second chewing gum composition portion; the multi-textured chewing gum product has an initial crunch characteristic determined by a Texture Analyzer Test where at least 4, at least 5, at least 6, or at least 7 million pascals stress is required during the first 10% of probe penetration into the product and, having a secondary peak (stress) that is greater than an initial peak (stress) by at least 0.25, at least 0.5, at least 0.75, or at least 1 million pascals, wherein the Texture Analyzer Test provides results as stress versus probe penetration (%).

There is described a multi-textured chewing gum product, comprising a.) a chewing gum composition portion and a confectionery composition portion; or b.) a first chewing gum composition portion and a second chewing gum composition portion, the first chewing gum composition portion having a different composition and different texture than the second chewing gum composition portion; the multi-textured chewing gum product has an initial crunch characteristic determined by a Texture Analyzer Test where the difference between a maximum stress value and a minimum stress value between 20% and 80% probe penetration into the product is at least 4.5 million pascals, wherein the Texture Analyzer Test provides results as stress versus probe penetration (%).

There is described a multi-textured chewing gum product, comprising a.) a chewing gum composition portion and a confectionery composition portion where a region of the chewing gum composition portion is exposed; or b.) a first chewing gum composition portion and a second chewing gum composition portion, the first chewing gum composition portion having a different composition and different texture than the second chewing gum composition portion, and where a region of the first or second chewing gum composition portion is exposed; the multi-textured chewing gum product has an initial crunch characteristic determined by a Texture Analyzer Test where the ratio of maximum stress value/minimum stress value between 20 and 80% probe penetration is at least 4, at least 5, at least 6, or at least 8; wherein the Texture Analyzer Test provides results as stress versus probe penetration (%).

There is described a multi-textured chewing gum product, comprising a.) a chewing gum composition portion and a confectionery composition portion; or b.) a first chewing gum composition portion and a second chewing gum composition portion, the first chewing gum composition portion having a different composition and different texture than the second chewing gum composition portion; the multi-textured chewing gum product has a chew characteristic determined by a Brabender Torque Test wherein i. the initial torque is less than the torque at 5 minutes, or ii. a percent increase in torque is greater than or equal to 24 N.m, or iii. a combination of i and ii, wherein the Brabender Torque Test provides results as torque versus time.

There is described a multi-textured chewing gum product, comprising a.) a chewing gum composition portion and a confectionery composition portion; or b.) a first chewing gum composition portion and a second chewing gum composition portion, the first chewing gum composition portion having a different composition and different texture than the second chewing gum composition portion; the multi-textured chewing gum product having a chew characteristic determined by a Brabender Torque Test wherein there is less than 20% or less than 15% variation in torque from a maximum torque and a minimum torque between time zero to 5 minutes ([(Maximum Torque - Minimum Torque)/Minimum Torque]x100 between time zero and 5 minutes), wherein the Brabender Torque Test provides results as torque versus time.

There is described a multi-textured chewing gum product, comprising a.) a chewing gum composition portion and a confectionery composition portion; or b.) a first chewing gum composition portion and a second chewing gum composition portion, the first chewing gum composition portion having a different composition and different texture than the second chewing gum composition portion; the multi-textured chewing gum product when analyzed in a Smear Test exhibits i) discontinuities after 10 minutes or after 14 minutes of mechanical chewing, ii) particulates having a longest dimension of greater than 2 mm after 6 minutes or after 10 minutes of mechanical chewing, or a combination of i) the discontinuities and ii) the particulates.

There is described a multi-textured chewing gum product, comprising a.) a chewing gum composition portion and a confectionery composition portion; or b.) a first chewing gum composition portion and a second chewing gum composition portion, the first chewing gum composition portion having a different composition and different texture than the second chewing gum composition portion; wherein the multi-textured chewing gum product comprises an opposite surface to a surface on which the product rests stably, the opposite surface having a surface roughness of 600 micrometers or greater; or 1200 micrometers or greater measured using a profilometer.

There is described a multi-textured chewing gum snack product comprising a.) a chewing gum composition portion and a confectionery composition portion, the chewing gum composition portion having a different texture than the confectionery composition portion; or b.) a first chewing gum composition portion and a second chewing gum composition portion, the first chewing gum composition portion having a different composition and different texture than the second chewing gum composition portion; and the multi-textured chewing gum snack product has a candy-like impression rating upon initial chewing that is at least 20 points greater than a candy-like impression rating of a chewing gum slab based on a scale of 0 to 100 as measured by descriptive analysis using the Quantitative Descriptive Analysis method.

There is described a multi-textured chewing gum snack product comprising a.) a chewing gum composition portion and a confectionery composition portion, the chewing gum composition portion having a different texture than the confectionery composition portion; or b.) a first chewing gum composition portion and a second chewing gum composition portion, the first chewing gum composition portion having a different composition and different texture than the second chewing gum composition portion; and the multi-textured chewing gum snack product has a candy-like impression rating of 35 to 100 upon initial chewing based on a scale of 0 to 100 as measured by descriptive analysis using the Quantitative Descriptive Analysis method where a traditional slab chewing gum that is monolithic and monotextured and prepared from sorbitol, gum base, glycerol, natural and artificial flavors, less than 2% of hydrogenated starch hydrolysate, aspartame, aspartame-acesulfame, mannitol, soy lecithin, acesulfame K, colors, and butylated hydroxytoluene is given a rating of 10 and a multi-textured chewing gum snack product according to Example 3 is given a rating of 75.

There is described a multi-textured chewing gum snack product comprising a.) a chewing gum composition portion and a confectionery composition portion, the chewing gum composition portion having a different texture than the confectionery composition portion; or b.) a first chewing gum composition portion and a second chewing gum composition portion, the first chewing gum composition portion having a different composition and different texture than the second chewing gum composition portion; and the multi-textured chewing gum snack product has a candy-like impression rating of 20 to 100 upon initial chewing based on a scale of 0 to 100 as measured by descriptive analysis using the Quantitative Descriptive Analysis method where a traditional slab chewing gum that is monolithic and monotextured and prepared from sorbitol, gum base, glycerol, natural and artificial flavors, less than 2% of hydrogenated starch hydrolysate, aspartame, aspartame-acesulfame, mannitol, soy lecithin, acesulfame K, colors, and butylated hydroxytoluene is given a rating of 10 and a multi-textured chewing gum snack product according to Example 3 is given a rating of 75; wherein a region of the chewing gum composition portion is exposed.

There is described a multi-textured chewing gum snack product comprises a.) a chewing gum composition portion and a confectionery composition portion, the chewing gum composition portion having a different texture than the confectionery composition portion; or b.) a first chewing gum composition portion and a second chewing gum composition portion, the first chewing gum composition portion having a different composition and different texture than the second chewing gum composition portion; and wherein the multi-textured chewing gum snack product exhibits a peak bend force of greater than 400 g-force as measured using a three point bend test.

There is described a multi-textured chewing gum snack product comprises a.) a chewing gum composition portion and a confectionery composition portion, the chewing gum composition portion having a different texture than the confectionery composition portion; or b.) a first chewing gum composition portion and a second chewing gum composition portion, the first chewing gum composition portion having a different composition and different texture than the second chewing gum composition portion; and after chewing the multi-textured chewing gum snack product for ten minutes results in a bolus size that is about 5 to about 15 wt% of the total starting weight of the multi-textured chewing gum snack product prior to chewing, optionally where a region of the chewing gum composition portion is exposed.

There is described a multi-textured chewing gum snack product comprises a.) a chewing gum composition portion and a confectionery composition portion, the chewing gum composition portion having a different texture than the confectionery composition portion; or b.) a first chewing gum composition portion and a second chewing gum composition portion, the first chewing gum composition portion having a different composition and different texture than the second chewing gum composition portion; and the multi-textured chewing gum snack product provides a sensory impression of consuming a snack product upon initial chewing, which transitions over a period of less than 120 seconds of chewing into a sensory impression of chewing a chewing gum; and a region of the chewing gum composition portion is exposed.

The above described and other features are exemplified by the following detailed description.

### BREIF DESCRIPTION OF THE DRAWINGS

The accompanying drawings incorporated in and forming a part of the specification:
Figure 1. Stress-strain curves for multi-textured chewing gum product "cookie dough" (curves depicted as a solid line) and stress-strain curves for comparative chewing gum (curves depicted as a dashed line) measured using a Texture Analyzer Test.
Figure 2. Stress-strain curves for multi-textured chewing gum product "indulgent" (curves depicted as a solid line) and stress-strain curves for comparative chewing gum (curves depicted as a dashed line) measured using a Texture Analyzer Test.
Figure 3. Stress-strain curves for multi-textured chewing gum product "breakables" (curves depicted as a solid line) and stress-strain curves for comparative chewing gum (curves depicted as a dashed line) measured using a Texture Analyzer Test.
Figure 4. Stress-strain curves for multi-textured chewing gum product "candy bar" (curves depicted as a solid line) and stress-strain curves for comparative chewing gum (curves depicted as a dashed line) measured using a Texture Analyzer Test.
Figure 5. Stress-strain curves for comparative chewing gums C1 and C4 measured using a Texture Analyzer Test.
Figure 6. Stress-strain curves for comparative chewing gums C2 and C4 measured using a Texture Analyzer Test.
Figure 7. Stress-strain curves for comparative chewing gums C3 and C4 measured using a Texture Analyzer Test.
Figure 8. Stress-strain curves for comparative chewing gum C4 measured using a Texture Analyzer Test.
Figure 9. Time versus torque curve for multi-textured chewing gum product "breakables" and comparative chewing gums measured using a Brabender Torque Test.
Figure 10. Surface parameter of interest in the surface roughness test is the distance between an upper peak (Point 1) and a lower valley (Point 2) of the surface of a sample.
Figure 11A. Schematic of the Smear Test apparatus, top view.
Figure 11B. Schematic of the Smear Test apparatus, front view.
Figure 11C. Schematic of the Smear Test apparatus, side view.
Figure 12A. Schematic of the Smear Test apparatus' slide.
Figure 12B. Schematic of the Smear Test apparatus' slide blade region.

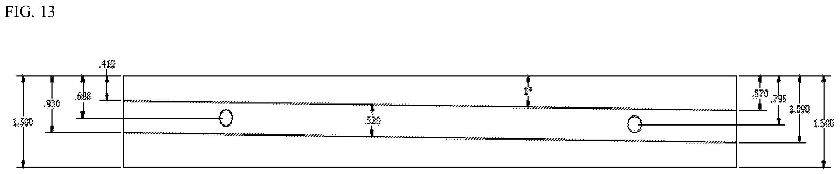

Figure 13. Schematic of the Smear Test apparatus' side view of the left rail with groove dimensions.

### DETAILED DESCRIPTION

Disclosed herein are chewing gum snack products (also referred to as "multi-textured chewing gum snack products") that deliver a snack-like eating experience not achieved by traditional slab, stick, and coated pellet chewing gums. By combining in a single product a chewing gum composition portion and a confectionery composition portion, or two different chewing gum composition portions, each portion having certain textures and flavors, a product is created that exhibits multi-sensory attributes (textural, appearance, flavor) leading to an emotionally satisfying snack-like eating experience for the consumer. Products with multiple textures, multiple flavors, and a snack-like appearance were found to engage the consumer and provide a snack-like eating experience, thus meeting various snacking needs of a consumer.

When chewed, the chewing gum snack products have initial sensory attributes reminiscent of chewing a snack product with a sensation of swallowing and upon continued chewing transforms over a period of time to sensory attributes of a chewing gum. Unlike traditional chewing gum, the chewing gum snack product is capable of satisfying a consumer's snacking urge.

Consumers seek emotional and sensory satisfaction when snacking and seek to compensate, maintain, or enhance mood. Sensory attributes of the chewing gum snack product can meet these needs. Snacks with an initial crunch or snacks with a crunchy/chewy combination can help people compensate or rebalance when stressed, tired, or bored. Snacks with a crunchy/chewy combination can help a consumer maintain ("keep on going") whether in a high or low energy state. Smooth, non-crunchy, or moderately crunchy snacks and snacks with fruity and indulgent flavors are enhancing an emotional state, adding to the moment to make a happy occasion happier, a relaxing moment more enjoyable, etc.

As the urge to snack is often linked to an emotional state of the consumer, the use of multi-sensorial chewing gum snack products can be used to satisfy the snacking vulnerability with their multitextured property, visual appeal, and flavor/aroma. Those products delivering a type of emotional satisfaction were strong in visual appeal, identifiable as food (which made them appear different than traditional chewing gum), maintained the consumer's interest, and having a visual identity that matches the flavor and texture experience. The flavor for these products is intense fruit or brown flavors, different flavors for different components of the product, long-lasting and meets expectations for character and intensity based on the products' appearance. The texture for these products meets expectations based on visual cues, does not fall apart during transition from initial chew of a snack to the final chew as a chewing gum. The product has a defined snack phase such that it is not immediately perceived as a chewing gum upon initial chew. The texture of the snack phase smoothly transitions to the chewing gum phase such that the consumer does not perceive physically separate snack pieces and chewing gum pieces in the mouth at the same time after the transition.

The multi-textured chewing gum snack product has visual characteristics of a snack food. The unique sensory attributes derived from the multi-textural qualities and flavor of the chewing gum product combined with the visual cues informs the consumer that the product is more than a traditional chewing gum. Attributes that make the product more snack-like include a combination of flavor and texture attributes as well sensation of swallowing.

Flavor attributes contributing to a snack-like perception include aromatic, brown flavors and fruit flavors.

Texture attributes contributing to a snack-like perception include crunchy, crumble, particulates, as well as different textures within the same product. Mouthfeel attributes contributing to a snack-like perception include melting/dissolvability, creaminess and mouth coating.

Also contributing to snack-like characteristics is a transition of texture from initial chew to a final chew. The initial chew experience is similar to a swallowable snack food product yet with further chewing transitions into a product having a chew experience like that of chewing gum. The transition time from a snack-like texture to a chewing gum-like texture occurs over a period of time sufficient so that the consumer perceives both textures.

The multi-textured chewing gum snack product may provide an initial crunchy or crispy texture that then transitions into a cohesive chewing texture upon continued chewing.

The term "confectionery" excludes chewing gum or compositions containing gum base or gum base polymers. If a composition contains gum base or a gum base polymer it will be characterized herein as "chewing gum".

In an embodiment, the confectionery composition portion of the multi-textured chewing gum snack product provides an initial creamy mouthfeel, crunchy, crispy, soft, grainy, or smooth texture.

The chewing gum snack product provides a consumer with the sensation of swallowing a snack food during the initial chew process, the sensation of swallowing a snack food is distinct from the sensation of swallowing increased amounts of saliva that may occur from chewing traditional chewing gum. The chewing gum snack product further exhibits a change in bolus size during consumption that contributes to the snack-like characteristic. Transitioning from a large bolus size at the initial chew to a small bolus size at the final stage of chewing is accompanied by the sensation of swallowing a snack food, specifically swallowing of the confectionery composition portion.

In an embodiment, a multi-textured chewing gum snack product comprises a chewing gum composition portion and a confectionery composition portion, and optionally one or more additional chewing gum composition portions, one or more additional confectionery composition portions, or a combination thereof.

Within the multi-textured chewing gum snack product, the chewing gum composition portion and the confectionery composition portion have different textures. If more than one chewing gum composition or confectionery composition portions are present, each portion can have different textures or similar textures as long as the texture of one chewing gum composition portion is different from one confectionery composition portion.

In an embodiment, the chewing gum snack product has a non uniform cross section.

In an embodiment, the chewing gum snack product is nonhomogeneous.

The multi-textured chewing gum snack product has different regions of chewing gum and confectionery. In an embodiment, at least one chewing gum composition portion is visually distinct from one confectionery composition portion, specifically each chewing gum composition portion and each confectionery composition portion are visually distinct from one another.

In an embodiment, at least one chewing gum composition portion has a different color than one confectionery composition portion, specifically each chewing gum composition portion and each confectionery composition portion have different colors from one another.

In an embodiment, at least one chewing gum composition portion has a different shape, size, or a combination thereof from one confectionery composition portion, specifically each chewing gum composition portion and each confectionery composition portion have different shapes, sizes, or a combination thereof. In an embodiment, at least one chewing gum composition portion has a different flavor from at least one confectionery composition portion, where each flavor is a fruit, a brown, a spice, a savory, or a combination thereof, specifically a brown flavor.

In an embodiment, the chewing gum snack product is breakable into sections, thereby capable of providing a hand to mouth interaction, again cuing the consumer that the multi-textured chewing gum snack product is more than a chewing gum.

In an embodiment, the confectionery composition portion allows for the product to have a degree of fracture, where the confectionery composition portion breaks into separate pieces when bent 90 degrees.

In an embodiment, the multi-textured chewing gum snack product can have a weight ratio of total chewing gum composition portion to total confectionery composition portion of about 10:90 to about 90:10, specifically about 20:80 to about 80:20, more specifically about 30:70 to about 70:30, and yet more specifically about 40:60 to about 60:40.

### Chewing gum composition portion

The chewing gum composition of the chewing gum composition portion comprises a gum base and a sugar polyol bulk sweetener. When combined with the gum base, the bulk sweetener can be in powdered form or in molten form.texture of the chewing gum composition.

The bulk sweetener of the chewing gum composition is a sugar-free bulk sweetener. Bulk sugar sweeteners generally include saccharides. Sugar sweeteners include mono-saccharides, di-saccharides and poly-saccharides, for example, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, or a combination thereof.

The bulk sweetener is a sugar-free bulk sweetener sugar alcohol, also referred to as a "sugar polyol". The sugar alcohol can be erythritol, galactitol, isomalt, a hydrogenated starch hydrolyzate, lactitol, maltitol, mannitol, polyglycitol, sorbitol, xylitol, or a combination thereof. The sugar alcohol can be in powdered or particulate form (either crystalline or amorphous), molten (melted) form having a low moisture content (e.g. less than 10 wt%, specifically less than 5 wt%), or in syrup form (also referred to as "solution") with water. Exemplary sugar alcohol syrups include sorbitol syrup, maltitol syrup, hydrogenated starch hydrolysate syrup, and polyglycitol syrup.

The amount of bulk sweetener in the chewing gum composition is about 35.0 to 75.0 wt% based on the total weight of the chewing gum composition.

In an embodiment, the chewing gum composition is sugar-free.

The chewing gum may further comprise an additional ingredient wherein the additional ingredient is a flavorant, a fat, a high intensity sweetener, a food acid or salt thereof, a sensate, a flavor modulator or potentiator, a coloring agent, a humectant, a salt, a softener, or a combination thereof.

Exemplary flavorants (flavor, flavoring agent) for use in the chewing gum composition can include those artificial or natural flavors known in the art, for example synthetic flavor oils, natural flavoring aromatics and/or oils, oleoresins, extracts derived from plants, leaves, flowers and fruits, or a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, or a combination thereof.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

Specific flavors suitable for conveying a snack-like quality include fruit, brown, and spice notes, or a combination thereof. Brown flavors include chocolate, butterscotch, caramel, toffee, vanilla, nutty, coffee notes, or a combination thereof. Spice flavors include cinnamon, nutmeg and aniseed.

The flavorant can be used in liquid or solid form. The flavorant can be used in free form or encapsulated form. When used in solid (dry) form, suitable drying means such as spray drying a flavor oil can be used. Alternatively, the flavorant can be encapsulated, absorbed onto water soluble materials by means known in the art, for example cellulose, starch, sugar, maltodextrin and gum arabic. In an embodiment, the flavorant can be used in physical forms effective to provide an initial burst of flavor or a prolonged sensation of flavor.

More than one flavorant can be used in the composition. The amount and type of flavorant can be chosen based on the targeted release profile and flavor intensity desired. The chewing gum composition generally comprises a flavorant in an amount of about 0.001 to about 5 wt% based on the total weight of the chewing gum composition, specifically about 0.01 to about 4 wt%, yet more specifically about 0.1 to about 3 wt%, and still yet more specifically about 1.0 to about 2 wt%.

The chewing gum composition may further contain a high intensity sweetener. A "high intensity sweetener" as used herein means agents having a sweetness greater than the sweetness of sucrose. In an embodiment, a high intensity sweetener has a sweetness that is at least 100 times that of sugar (sucrose) on a per weight basis, specifically at least 500 times that of sugar on a per weight basis. In an embodiment the high intensity sweetener is at least 1,000 times that of sugar on a per weight basis, more specifically at least 5,000 times that of sugar on a per weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Representative categories and examples of particular sweetners include:
water-soluble sweetening agents such as dihydrochalcones, monellin, steviosides, rebaudiosides, glycyrrhizin, dihydroflavenol, monatin, and L-aminodicarboxylic acid aminoalkenoic acid ester amides, such as those disclosed in U.S. Pat. No. 4,619,834, or a combination thereof;
water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination thereof; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination thereof;
   water-soluble sweeteners derived from naturally occurring water-soluble sweeteners, such as steviosides and stevia derived compounds, for example, steviol glycosides such as rebaudiocides including rebaudiocide A, lo han quo and lo han quo derived compounds such as iso-mogroside V, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include, for example: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideoxy-beta-D-fructofuranoside, or 4,6,1',6'-tetrachloro4,6,1',6'-tetradeoxygalacto-sucrose; 4,6,1',6'-tetradeoxy-sucrose, or a combination thereof;
   protein based sweeteners such as thaumaoccous danielli, talin, or a combination thereof; and
   amino acid based sweeteners.

Furthermore, the high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, or a combination thereof.

The chewing gum composition can contain a fat which can provide textural attributes and a mouth coating feeling when the chewing gum snack product is consumed. Exemplary fats for use in the chewing gum composition include fats and oils of vegetable origin, animal origin, or a combination thereof. Suitable vegetable fats can include soybean, cottonseed, corn, almond, peanut, sunflower, rapeseed, olive, palm, palm kernel, illipe, shea, coconut, cocoa, cocoa butter, or a combination thereof. The forgoing vegetable fats can be hydrogenated to varying degrees as desired or separated by fractional crystallization. Suitable animal fats include dairy fats such as milk fat and butter. As used herein, the term "fat" refers to any lipid material and can be solid or liquid (e.g. oil). Exemplary lipid materials include triglycerides, fatty alcohols, fatty acids, or a combination thereof. The triglyceride is not limited although medium chain triglycerides, or long chain triglycerides can be used. The melting point of the fat is not limited although fats having a melting point of about 15 to about 68°C can be used. Specific fats include hydrogenated palm oil, hydrogenated palm kernel oil, hydrogenated soybean oil, hydrogenated peanut oil, hydrogenated cottonseed oil, hydrogenated coconut oil, or a combination thereof. In an embodiment, the chewing gum composition contains a low melting point fat, having a melting point of about 15 to about 50° C.

A fat can be present in the chewing gum composition in an amount of about 0.1 to about 25 wt% based on the total weight of the chewing gum composition, specifically about 1.0 to about 15, and more specifically about 5 to about 10 wt%.

The chewing gum composition may optionally further comprise a coloring agent. Coloring agents (colors, colorants, colorings) can be used in amounts effective to produce a desired color for the chewing gum. Suitable coloring agents include pigments, which can be incorporated in amounts up to about 6 wt% based on the total weight of the chewing gum. For example, titanium dioxide can be incorporated in amounts up to about 2 wt%, and specifically less than about 1 wt% based on the total weight of the chewing gum. Suitable coloring agents also include natural food colors and dyes suitable for food, drug, and cosmetic applications.

Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), or a combination thereof. In an embodiment, certified colors can include FD&C aluminum lakes, or a combination thereof. A full recitation of all FD& C colorants and their corresponding chemical structures may be found in the Kirk-Othmer Encyclopedia of Chemical Technology, 4th Edition, in volume 1 at pages 492-494.

Exemplary food acids or salts thereof for use in the chewing gum can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof. The food acid or salt thereof may be used in free form or in an encapsulated form.

The chewing gum composition may comprise a sensate. Exemplary sensates include cooling agents, warming agents, tingling agents, effervescent agents, or a combination thereof.

The chewing gum composition may optionally further comprise a flavor modulator or potentiator. A sweet taste can come from flavor modulators or potentiators and/or from flavorants as well as from sweeteners. Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In an embodiment, flavor modulators or potentiators are designed to intensify, supplement, modify, or enhance the perception of flavor, sweetness, tartness, umami, kokumi, saltiness or a combination thereof can be included. Thus, the addition of flavor modulators or potentiators can impact the overall taste of the chewing gum. For example, flavors can be compounded to have additional sweet notes by the inclusion of flavor modulators or potentiators, such as vanilla, vanillin, ethyl maltol, furfual, ethyl propionate, lactones, or a combination thereof.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and TIRs), or a combination thereof. In an embodiment, sugar acids, sodium chloride, potassium chloride, sodium acid sulfate, or a combination thereof are used. In an embodiment, glutamates such as monosodium glutamate, monopotassium glutamate, hydrolyzed vegetable protein, hydrolyzed animal protein, yeast extract, or a combination thereof are included. Further examples include adenosine monophosphate (AMP), glutathione, and nucleotides such as inosine monophosphate, disodium inosinate, xanthosine monophosphate, guanylate monophosphate, or a combination thereof. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final product composition, the individual flavor, and the strength of flavor desired. Thus, the amount of flavoring can be varied in order to obtain the result desired in the final product and such variations are within the capabilities of those skilled in the art without the need for undue experimentation.

The chewing gum composition may optionally further comprise an amount of a salt, specifically sodium chloride, to provide a salty/sweet flavor in the presence of the bulk sweetener or high intensity sweetener. Amounts of salt present in the chewing gum composition can be about 0.001 to about 0.5 wt% based on the total weight of the chewing gum composition, specifically about 0.01 to about 0.1wt%, and more specifically about 0.04 to about 0.07 wt%.

The chewing gum composition may optionally further comprise a humectant. Exemplary humectants include glycerin, propylene glycol, polyethylene glycol, or a combination thereof. The amount of humectant can be controlled to ensure the final chewing gum product does not unduly absorb moisture from the surrounding environment during production, packaging, storage, and use.

The chewing gum composition may further include a softener, such as those described herein for use in the gum base.

Another ingredient that can be added to the chewing gum composition includes a bicarbonate salt, such as sodium bicarbonate, which can provide aeration to the composition when the composition is heated to a temperature above 120 °C.

The chewing gum composition comprises a chewing gum base. In an embodiment, the chewing gum comprises a gum base comprising an elastomer and optionally an additional gum base ingredient, wherein the additional gum base ingredient is a resin, a fat, an emulsifier, a wax, a filler, a softener, a plasticizer, an antioxidant, or a combination thereof.

As used herein, the term "gum base" refers to water insoluble material(s) and can include, for example, elastomers, resins, waxes, elastomer solvents, emulsifiers, plasticizers, bulking agents/fillers, or a combination thereof.

The amount of gum base employed will vary depending upon various factors such as the type of base used, the consistency of the chewing gum desired, and the other components used in the composition to make the final chewing gum product. In general, the gum base will be present in amounts of about 10 to about 55 wt%, more specifically about 15 to about 45 wt%, and yet more specifically about 20 to about 35 wt%.

Exemplary elastomers to be used in the chewing gum base include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, or a combination thereof. Synthetic elastomers such as butadiene-styrene copolymers, polyisobutylene, isobutyleneisoprene copolymers, polyethylene, or a combination thereof are also useful. The gum base can include a non-toxic vinyl polymer, such as polyvinyl acetate and its partial hydrolysate, polyvinyl alcohol, or a combination thereof. When utilized, the molecular weight of the vinyl polymer can range from about 3,000 up to and including about 94,000. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate, or a combination thereof.

Conventional additives can be included in the gum base in effective amounts such as plasticizers or softeners to provide a variety of desirable textures and consistency properties. Because of the low molecular weight of these components, the plasticizers and softeners are able to penetrate the fundamental structure of the gum base making it plastic and less viscous. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerin, or a combination thereof. Some of these ingredients may be added at the time of gum base formation or added later during the production of the chewing gum composition.

Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, or a combination thereof, can also be incorporated into the gum base to obtain a variety of desirable textures and consistency properties.

When a wax is present in the gum base, it softens the polymeric elastomer mixture and improves the elasticity of the gum base. The waxes employed may have a melting point below about 60° C, and specifically between about 45° C and about 55° C. The low melting wax can be a paraffin wax. The wax can be present in the gum base in an amount of about 0.1 to about 10 wt%, and specifically about 3 to about 7 wt% based on the total weight of the gum base.

In addition to the low melting point waxes, waxes having a higher melting point can be used in the gum base in amounts up to about 5 wt% based on the total weight of the gum base. Such high melting waxes include beeswax, vegetable wax, candelilla wax, carnuba wax, most petroleum waxesor a combination thereof.

The gum base can optionally contain conventional elastomer solvents to aid in softening the elastomer base component, for example resins such as polymers of alpha-pinene or beta-pinene; methyl, glycerol or pentaerythritol esters of rosins or modified rosins and gums, such as hydrogenated, dimerized or polymerized rosins, or a combination thereof; the pentaerythritol ester of partially hydrogenated wood or gum rosin; the pentaerythritol ester of wood or gum rosin; the glycerol ester of wood rosin; the glycerol ester of partially dimerized wood or gum rosin; the glycerol ester of polymerized wood or gum rosin; the glycerol ester of tall oil rosin; the glycerol ester of wood or gum rosin; the partially hydrogenated wood or gum rosin; the partially hydrogenated methyl ester of wood or rosin;; or a combination thereof. The elastomer solvent can be used in amounts of about 5 to about 75 wt% base on the total weight of the gum base, and specifically about 45 to about 70 wt%.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate

, or a combination thereof. These fillers or adjuvants can be used in the gum base in various amounts. Specifically the amount of filler, when used, can be present in an amount of greater than about 5 to about 60 wt% based on the total weight of the gum base, and more specifically from about 20 to about 30 wt%.

Suitable emulsifiers for use in the gum base include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate, lecithin, ammonium phosphatide, sucrose esters of fatty acids, sucroglycerides, propane-1,2-diol esters of fatty acids, or a combination thereof.

The chewing gum composition can be prepared using standard techniques and equipment known in the art.

In one exemplary process, a gum base is heated to a temperature sufficiently high to soften the gum base without adversely affecting the physical and chemical make up of the gum base, which will vary depending upon the composition of the gum base used, and is readily determined by those skilled in the art without undue experimentation. For example, the gum base can be conventionally melted to about 60°C to about 160°C, or melted to about 150°C to about 175°C, for a period of time sufficient to render the base molten, e.g., about thirty minutes, just prior to being admixed incrementally with the remaining ingredients of the gum base, if any, such as the plasticizer, fillers, and softener to plasticize the blend as well as to modulate the hardness, viscoelasticity and formability of the base. The chewing gum ingredients are next blended with the molten gum base. Mixing is continued until a uniform or homogeneous mixture of the chewing gum composition is obtained.

In another exemplary process, chewing gum ingredients are mixed with gum base without prior melting of the gum base or gum base ingredients. Mixing is continued until a uniform or homogeneous mixture of the chewing gum composition is obtained. Within this embodiment, the gum base can be in the form of a pelletized gum base that can be softened at 40 to 50°C rather than melting at higher temperatures.

In another embodiment, a combination of melted gum base and pelletized gum base can be used.

The chewing gum composition can be prepared using a batch method or a continuous method or a combination thereof.

### Confectionery composition portion

The confectionery composition portion can be a candy brittle, a caramel, a chewy candy, a chocolate (dark, milk, white), carob, a compound coating, a cotton candy, a fondant, a fudge, a glaze, a gum drop candy, a gummi, a hard boiled candy, a jelly (agar, carrageenan, gelatin, konjac, pectin, or starch based), a licorice, marshmallow, a marzipan, a nougat, a praline, a taffy, a toffee, a sprinkle, or a combination thereof.

The confectionery composition can be prepared from a sugar, saccharide, or sugar-free sweetener. Exemplary sugar-based sweeteners include saccharides including mono-saccharides, di-saccharides and poly-saccharides, for example, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, or a combination thereof.

Exemplary sugar-free sweeteners include sugar alcohols such as erythritol, galactitol, isomalt, a hydrogenated starch hydrolyzate, lactitol, maltitol, mannitol, polyglycitol, sorbitol, xylitol, or a combination thereof. The sugar alcohol can be in powdered or particulate form (either crystalline or amorphous), molten (melted) form having a low moisture content (e.g. less than 10 wt%, specifically less than 5 wt%), or in syrup form (also referred to as "solution") with water. Exemplary sugar alcohol syrups include sorbitol syrup, maltitol syrup, hydrogenated starch hydrolysate syrup, and polyglycitol syrup.

In an embodiment, the confectionery composition is sugar-free.

The confectionery composition may further comprise an additional confectionery ingredient wherein the additional confectionery ingredient can be a flavorant, a fat, a high intensity sweetener, a food acid or salt thereof, a sensate, a flavor modulator or potentiator, a coloring agent, a humectant, cocoa powder, a salt, or a combination thereof. Any of the flavorants, fats, high intensity sweetener, food acid or salt thereof, sensate, flavor modulator or potentiator, coloring agent, a salt, or humectant previously described for use to prepare the chewing gum composition can be used for the confectionery composition.

The confectionery composition can be a chocolate (dark, milk, white). In place of chocolate, the confectionery composition can be a carob composition.

The confectionery composition can be a hard boiled candy.

The confectionery composition can be a caramel.

The confectionery composition can be a chewy candy.

The confectionery composition can be a glaze.

The confectionery composition can be a gummi. "Gummi" confections (also referred to as "gummy candy") includes a hydrocolloid texturizing agent such as gelatin alone or in combination with other texturizing agents.

The confectionery composition may comprise a hydrocolloid. Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Modified natural gums include propylene glycol alginate, carboxymethyl locust bean gum, low methoxyl pectin, or a combination thereof. Modified celluloses can be included such as microcrystalline cellulose, carboxymethlcellulose (CMC), methylcellulose (MC), hydroxypropylmethylcellulose (HPCM), hydroxypropylcellulose (MPC), or a combination thereof.

The confectionery composition can be prepared using standard techniques and equipment known in the art.

### Chewing gum snack product

The chewing gum snack product is a composite of a chewing gum composition portion and a confectionery composition portion.

In an embodiment, the chewing gum snack product is a composite of a chewing gum composition portion and a confectionery composition portion, wherein the total amount of gum base is about 10 to about 40, specifically 15 to about 35 wt%; the total amount of bulk sweetener is about 25 to about 80, specifically about 35 to about 70 wt%; the total amount of fat is about 1 to about 20, specifically about 3 to about 11 wt%; and the total amount of salt is 0 to 0.75 wt%, specifically about 0.1 to about 0.60 wt% where all weights based on the total weight of the chewing gum snack product. In an embodiment, the chewing gum snack product is a composite of a chewing gum composition portion and a confectionery composition portion, wherein the amount of confectionery composition is about 10 to about 50 wt%, specifically about 15 to about 45 wt%, more specifically about 20 to about 40 wt% and yet more specifically about 25 to about 35 wt%, based on the total weight of the chewing gum snack product.

The chewing gum composition portion and the confectionery composition portion can be formed into the chewing gum snack product using a variety of processes including an extrusion process, a coextrusion process, a triple extrusion process, a laminate process, a molding process, a compression process, a rolling and scoring process, a chain die process, and a rotary die process.

The chewing gum snack product can be prepared in any shape including a slab format, stick, square, chunk and a round. In an embodiment, the chewing gum snack product is formed to have a region of the chewing gum composition portion that is exposed.

In an embodiment, the chewing gum snack product has a surface of the confectionery composition portion in contiguous contact with a surface of the chewing gum composition portion. In another embodiment, the confectionery composition portion is in the form of a substrate that is in contiguous contact with a surface of the chewing gum composition portion. In another embodiment, one portion, either the confectionery composition portion or the chewing gum composition portion, is in the form of a coating partially coating the other portion. The degree of covering is less than 100% and can be about 1 to about 90% of the surface area of the portion covered, specifically about 10 to about 80%, more specifically about 20 to about 70%, yet more specifically about 30 to about 60%, and still yet more specifically about 40 to about 50%.

The confectionery composition portion can be in the form of a decorative drizzle over the chewing gum composition portion where regions of the chewing gum composition remains exposed or in the form of a glaze surrounding a part of the chewing gum composition portion or surrounding all of the portion.

The confectionery composition portion can be in the form of an inclusion within the chewing gum composition. For example, a cookie dough chewing gum can be prepared with chocolate chips randomly distributed throughout the matrix of the chewing gum composition. In addition, the cookie dough chewing gum can further include a confectionery composition coating in the form of a glaze surrounding a part of the cookie dough chewing gum portion or surrounding all of the portion.

There is described a chewing gum snack product having a surface of the first chewing gum composition portion in contiguous contact with a surface of the second chewing gum composition portion. The first chewing gum composition portion may be in the form of a substrate that is in contiguous contact with a surface of the second chewing gum composition portion. One chewing gum composition portion may be in the form of a coating partially coating the other chewing gum portion. The degree of covering is less than 100% and can be about 1 to about 90% of the surface area of the portion covered, specifically about 10 to about 80%, more specifically about 20 to about 70%, yet more specifically about 30 to about 60%, and still yet more specifically about 40 to about 50%.

The chewing gum snack product can be formed into a piece weight of about 0.5 grams to about 8.0 grams, specifically about 1.0 grams to about 6.0 grams, specifically about 1.5 grams to about 5.0 grams, yet more specifically about 2.0 to about 4.0 grams, and yet more specifically about 2.5 grams to about 3.0 grams.

In an embodiment, the multi-textured chewing gum snack product has a nonuniform cross section. In an embodiment, the multi-textured chewing gum snack product is nonhomogeneous. Specifically, the chewing gum snack product is not a traditional slab chewing gum and is not a traditional hard or soft coated pellet chewing gum and is not a traditional gum ball. Instead, the chewing gum snack product has a chewing gum composition portion that has a different texture than a confectionery composition portion.

In an embodiment, a region of the chewing gum composition portion, the confectionery composition portion, or both has a surface roughness (Rₐ) of greater than 50 micrometers, specifically greater than 100 micrometers, more specifically greater than 200 micrometers.

### Texture Analysis

The multi-textured chewing gum product exhibits different chew textures and mouthfeel compared to traditional chewing gum. In order to characterize the differences, various analytical tests were developed to characterize the difference between the multi-textured chewing gum products and traditional chewing gum at the initial bite and from initial bite to chew.

Several embodiments of the multi-textured chewing gum product have an initial chew texture that is more crunchy or otherwise different than traditional chewing gum. This provides and new and pleasing experience to the consumer. To quantitatively characterize "initial crunch", an Initial Crunch Texture Analyzer Test (or just "Texture Analyzer Test") as set out in Example 10 can be conducted. In general, the Texture Analyzer Test is conducted using a texture analyzer equipped with a 2 millimeter (mm) probe (cylinder, length of 25 mm) at a 1 millimeter/second probe speed and 95% probe penetration (95% of sample is being penetrated with the probe in the direction of the applied force), eight runs per sample type, and the results are provided as stress versus probe penetration (%) or stress-strain curves.

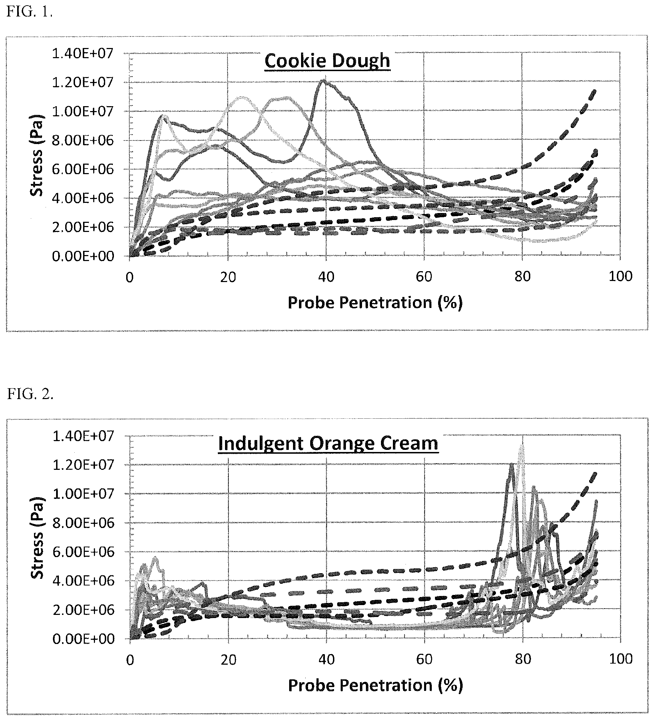

The stress versus probe penetration (%) curves (alternatively referred to as "stress-strain curves") for the multi-textured chewing gum products differ significantly from traditional chewing gum, such as traditional uncoated slab or stick formats or hard panned coated chewing gum pellets. The traditional uncoated slab gum exhibit stress-strain curves having generally positive slopes (see e.g. Figure 1 dashed line) and no peaks, i.e. local maxima of stress present in stress-strain curves of multi-textural chewing gum products (see e.g. Figure 1, solid line). The peak has a positive slope on one side and a negative slope on the other side. The shape and magnitude of the peaks will vary and depend on type of chewing gum or confectionery composition portions (size, shape, e.g. layers or inclusions); type of composition of the chewing gum or confectionery composition (e.g. hard candy, soft candy, chocolate, other chewing gum portion); or amount of chewing gum or confectionery composition portion. The peaks or variations in the curves represent chew resistance and correlate to the different senses perceived when a consumer performs a single bite on a sample.

In an embodiment, the multi-textured chewing gum product has an initial crunch characteristic determined by the Texture Analyzer Test where there are at least three, four, five, six, seven, eight or more changes in slope direction in a stress versus probe penetration (%) curve and at least one negative slope that covers a stress range of at least 1 million pascals, specifically at least 1.5 million pascals, more specifically at least 2 million pascals, and yet more specifically at least 2.5 million pascals. The "at least one negative (downward) slope covering a range of at least x million Pa" means the stress is reduced by at least x million pascals from a peak of a negative slope to where the curve changes to a positive slope or the curve ends. There is described a multi-textured chewing gum product that can further have an initial crunch characteristic determined by the Texture Analyzer Test that requires at least 4 million pascals stress during the first 10% of probe penetration into the product, specifically at least 5 million pascals, more specifically at least 6 million pascals, and yet more specifically at least 7 million pascals during the first 10% of probe penetration into the product. Such a multi-textured chewing gum product can further have an initial crunch characteristic determined by the Texture Analyzer Test where there is a peak stress of at least 2 million pascals between 30% and 60% probe penetration into the product, specifically at least 4 million pascals, more specifically at least 6 million pascals, and yet more specifically at least 8 million pascals between 30% and 60% probe penetration into the product. Further, such a multi-textured chewing gum product can have an initial crunch characteristic determined by the Texture Analyzer Test where there is a secondary peak (stress) that is greater than an initial peak (stress) by at least 0.25 million pascals, specifically greater than an initial peak (stress) by at least 0.5 million pascals, more specifically greater than an initial peak (stress) by at least 0.75 million pascals, and yet more specifically greater than an initial peak (stress) by at least 1 million pascals. This means there are at least two local maxima in the stress versus probe penetration (%) curve wherein the secondary peak (stress) occurs at a higher probe penetration (%) and is greater in intensity than the initial peak (stress) by the amount previously indicated.

There is described a multi-textured chewing gum product that can further have an initial crunch characteristic determined by a Texture Analyzer Test where the difference between a maximum stress value and a minimum stress value between 20% and 80% probe penetration into the product is at least 4.5 million pascals, specifically at least 6 pascals, and more specifically at least 8 pascals.

There is described a multi-textured chewing gum product that can further have an initial crunch characteristic determined by a Texture Analyzer Test where the ratio of maximum stress value/minimum stress value between 20 and 80% probe penetration is at least 4, specifically at least 5, more specifically at least 6, yet more specifically at least 8.

It was found that the multi-textured chewing gum product exhibits characteristic properties in a Brabender Torque Test compared to traditional chewing gum due to the combination of different portions prepared from chewing gum or confectionery compositions having different textures. The Brabender Torque Test is described in Example 11 below and can be used to analyze the texture transition from first crunch to chew of a sample. The Brabender Torque Test is generally conducted by loading 40-50 grams of sample into a Brabender Do-Corder mixer equipped with roller mixing blades for dry mixing. Mixing is conducted at 15 revolutions per minute "RPM" and 25 °C and torque resistance to deformation is measured over a period of five minutes. Six runs per sample are performed.

There is described a multi-textured chewing gum product that has a chew characteristic determined by a Brabender Torque Test wherein i. the initial torque is less than the torque at 5 minutes, or ii. a percent increase in torque is greater than or equal to 24 N.m, or iii. a combination of i and ii, wherein the Brabender Torque Test provides results as torque versus time and is conducted by loading 40-50 grams of sample into a Brabender Do-Corder mixer equipped with roller mixing blades for dry mixing; mixing is conducted at 15 RPM and 25 °C and torque resistance to deformation is measured over a period of five minutes; six runs per sample are performed.

A multi-textured chewing gum product may have a chew characteristic determined by a Brabender Torque Test wherein the % increase in torque ([(Maximum Torque - Initial Torque)/Initial Torque]x100 between time zero and 5 minutes) is less than 10% specifically less than 8%, and there is less than 20%, specifically less than 15% variation in torque from a maximum torque and a minimum torque between time zero to 5 minutes ([(Maximum Torque - Minimum Torque)/Minimum Torque]x100 between time zero and 5 minutes), wherein the Brabender Torque Test provides results as torque versus time and is conducted by loading 40-50 grams of sample into a Brabender Do-Corder mixer equipped with roller mixing blades for dry mixing; mixing is conducted at 15 RPM and 25 °C and torque resistance to deformation is measured over a period of five minutes; six runs per sample are performed.

A multi-textured chewing gum product may have a surface roughness of 300 micrometers or greater, to a maximum of about 5000 micrometers. A multi-textured chewing gum product may have a surface roughness of 400 micrometers or greater, to a maximum of about 5000 micrometers. A multi-textured chewing gum product may have a surface roughness of 600 micrometers or greater, to a maximum of about 5000 micrometers. A multi-textured chewing gum product may have a surface roughness of 1200 micrometers or greater, to a maximum of about 5000 micrometers. The surface roughness can be measured using a profilometer and reported as an average peak-to-valley difference in micrometers as in Example 12.

The cohesiveness of the chew for the multi-textured chewing gum products can be analyzed using a Brabender Smear Test involving mechanically chewing the product, smearing the resulting chewed material on a surface and analyzing for particulates and discontinuities (i.e. holes) in the spread material. "Cohesiveness" is defined as how well a mass of material will stick to itself without falling apart. In some of the multi-textured chewing gum products, when initially chewed, the product mass tends to fall apart, that is it is less cohesive. Over time, with additional chewing, the cohesiveness increases. This provides the consumer with different texture experiences in different portions of the mouth resulting in a more exciting chew.

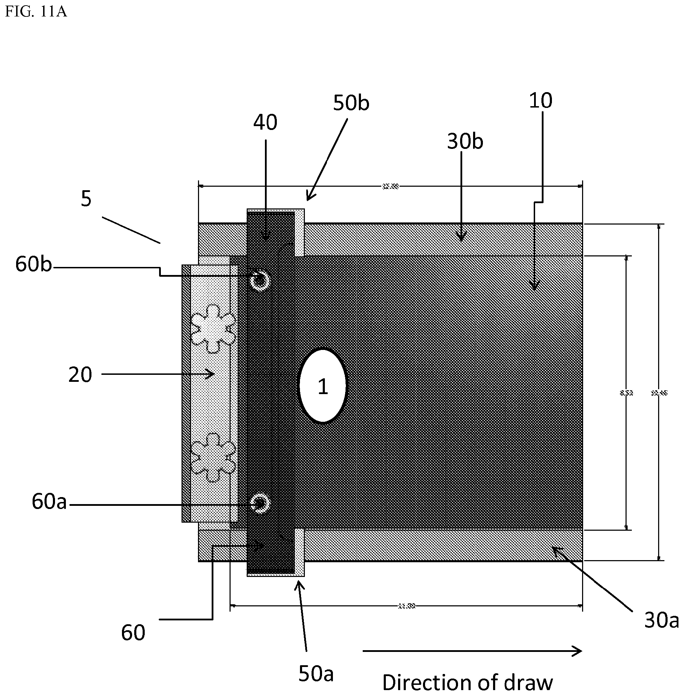

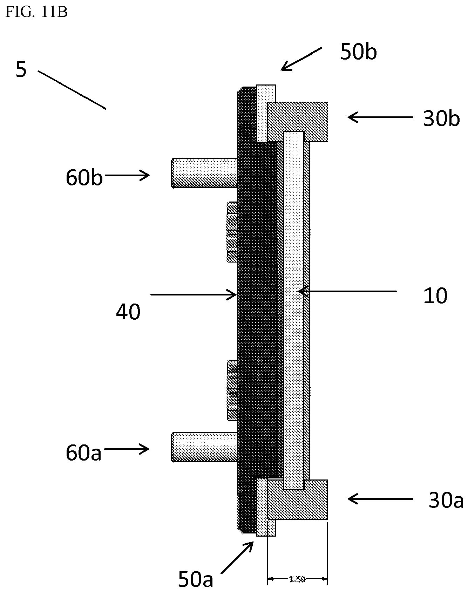

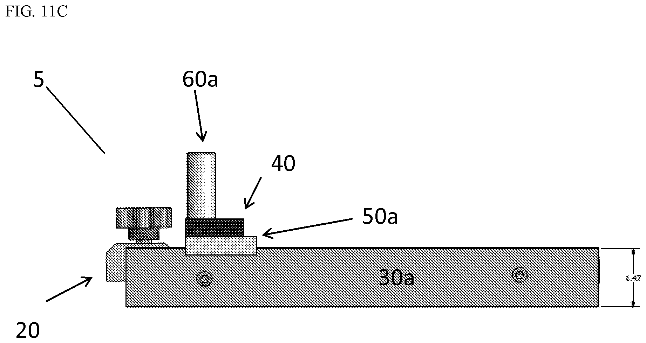

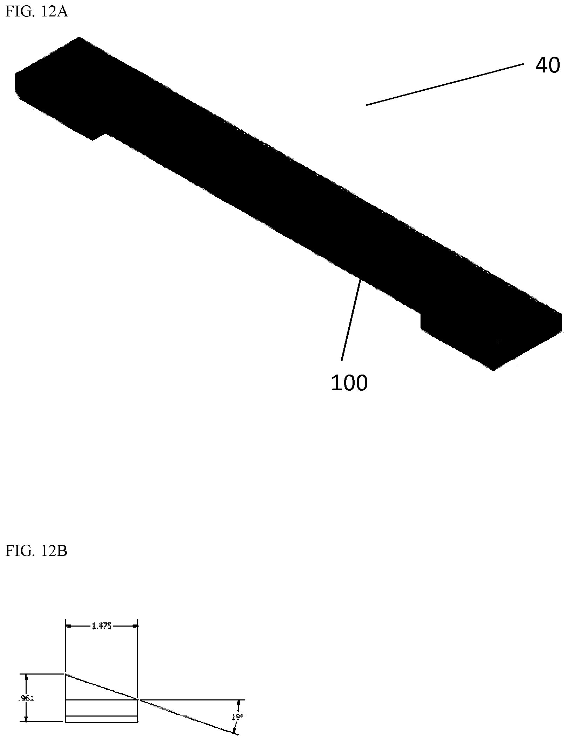

The Brabender Smear Test can be conducted according to the procedure in Example 13. The Brabender Spear Test may be conducted by loading 120-280 grams of sample (objective is to put in enough sample to fill the head without it running empty or partially full) into a 60-90cc Brabender mixer equipped with Sigma blades while the mixer is on, which takes about 3-5 minutes and then conducting mechanical chewing for up to 14 minutes at 40 RPM, 21-24 °C, water flow, circulator pump at 80 milliliters/minute. The mechanically chewed material is dried on a weighing dish for 2-3 minutes at room temperature and then 50 grams of the chewed material is spread over laminated paper (can be laminated graph paper such as Crystine Cover Gloss White 14 PT 8-1/2x 11 Grain Short 150/ Ream) using a Smear Test Apparatus described in Example 13. The Smear Test Apparatus (5) as illustrated in Figures 11A (top view), 11B (front view), and 11C (side view) includes a base plate (10) having a test paper catch (20) that firmly holds the laminated paper (not shown in the figures) on the surface of the base plate (10). Connected to the base plate (10) is a left rail (30a) and a right rail (30b). Each rail has a groove the length of the rail where the base plate fits in placing the base plate at an angle which slopes down toward the test paper catch (20). A slide (40) is attached to a left slide bearing (50a) and a right slide bearing (50b) allowing the slide (40) to sit atop and span the width of the Apparatus (5). The slide (40) has a slide blade (100) on the bottom side, the slide blade (100) having a generally triangular shape with the thinnest point of about 1 mm thick (Figure 12, 100). Figure 12 is a bottom view of the slide (40) where the side with the slide blade (100) point is placed nearest to the test paper catch (20) and the side with the largest part of the gap towards the chewed sample (1). The slide (40) can be slid over the top of the rails and the angle of the groove in the rails results in a gap between the bottom of the slide (40) and the top of the base plate (10) of about 3 mm nearest the test paper catch (20) and a gap reaching about 0 mm at the end furthest from the test paper catch (20). Left (60a) and right handles (60b) attached to the slide (40) allows for an operator to draw the slide (40) over the chewed sample (1) by applying a sufficient downward and sliding force to smear a 50 gram quantity of chewed sample (1) across the surface of the laminated paper to achieve a smeared sample (not shown in Figure) having a length of 18 cm, a thickness of about 6 mm at the end closest to the start of the smear (closest to the test paper catch (20)) and a thickness of about 2 mm at the end furthest from the start of the smear (furthest from the test paper catch (20)). The time it takes to smear the sample is about 4-5 seconds. Figure 11A illustrates the direction of the draw. The smeared sample on the paper and the paper are removed from the test apparatus together and the smeared sample is analyzed for the presence of particulates and discontinuities. General dimensions of the Smear Test Apparatus (5) are summarized in Table 31 below.

A multi-textured chewing gum product when analyzed in a Smear Test may exhibit i) discontinuities after 10 minutes or after 14 minutes of mechanical chewing, ii) particulates having a longest dimension of greater than 2 mm after 6 minutes or after 10 minutes of mechanical chewing, or a combination of i) the discontinuities and ii) the particulates, wherein the Smear Test is conducted by loading 120-280 grams of sample into a 60-90cc Brabender mixer equipped with Sigma blades and conducting mechanical chewing for up to 14 minutes at 40 RPM, 21-24 °C, water flow, circulator pump at 80 milliliters/minute; "discontinuities" means a hole in the smeared sample that is at least .05 inches (12.7 millimeters) long measure in one direction.

### Sensory Analysis

Descriptive analysis is a sensory method by which the sensory attributes of a food or product are identified and quantified, using human subjects who have been specifically chosen and trained for this purpose. Once trained, a panel of evaluators will function as a human analytical instrument, generating reproducible values, rather than degrees of liking or dislike as in consumer panels.

The chewing gum snack products when evaluated for various sensory properties in comparison to traditional slab chewing gum using a panel trained in the principles of quantitative descriptive analysis (QDA) as described by Stone & Sidel (Stone & Sidel, Sensory Evaluation Practices, 3rd ed. San Diego, CA. Elsevier Academic Press (2004)) exhibit properties that are more snack-like than chewing gum-like, particularly in the initial and early stages of the chewing process.

One attribute that is indicative of a product having more of a snack-like quality than a chewing gum-like quality is a high candy-like impression rating. Candy-like impression is a measure of how much the sample is perceived as similar to candy or similar to gum. Traditional slab chewing gum has a low candy-like impression as it gives the overwhelming impression of chewing gum.

The chewing gum snack product may have a candy-like impression rating upon initial chewing that is at least 20, specifically 20 to 70, and more specifically 30 to 50 points greater than a candy-like impression rating of a chewing gum slab based on a scale of 0 to 100 as measured by descriptive analysis using the Quantitative Descriptive Analysis method.

In The chewing gum snack product may have a candy-like impression rating at 30 seconds from the start of chewing that is at least 10, specifically 10 to 35, and more specifically 15 to 25 points greater than a candy-like impression rating of a traditional chewing gum slab based on a scale of 0 to 100 as measured by descriptive analysis using the Quantitative Descriptive Analysis method.

The multi-textured chewing gum snack product may have a candy-like impression rating of 35 to 80 upon initial chewing based on a scale of 0 to 100 as measured by descriptive analysis using the Quantitative Descriptive Analysis method where a traditional slab chewing gum (monolithic and monotextured prepared from sorbitol, gum base, glycerol, natural and artificial flavors, less than 2% of hydrogenated starch hydrolysate, aspartame, aspartame-acesulfame, mannitol, soy lecithin, acesulfame K, colors, and butylated hydroxytoluene (BHT)) is given a rating of 10 and a multi-textured chewing gum snack product according to Example 3 is given a rating of 75.

The multi-textured chewing gum snack product may have a crunchy rating upon initial chewing that is at least 7.5, specifically 20 to 70, and more specifically 25 to 45 points greater than a crunchy rating of a traditional chewing gum slab based on a scale of 0 to 100 as measured by descriptive analysis using the Quantitative Descriptive Analysis method.

The multi-textured chewing gum snack product may have a crunchy rating at 30 seconds from the start of chewing that is at least 5.0, specifically 10 to 50, and more specifically 20 to 45 points greater than a crunchy rating of a traditional chewing gum slab based on a scale of 0 to 100 as measured by descriptive analysis using the Quantitative Descriptive Analysis method.

The multi-textured chewing gum snack product may have a cohesiveness rating upon initial chewing that is at least 8, specifically 10 to 50, and more specifically 20 to 45 points smaller than a cohesiveness rating of a traditional chewing gum slab based on a scale of 0 to 100 as measured by descriptive analysis using the Quantitative Descriptive Analysis method.

The multi-textured chewing gum snack product may have a cohesiveness rating at 5 seconds from the start of chewing that is at least 5, specifically 10 to 35, and more specifically 15 to 25 points smaller than a cohesiveness rating of a traditional chewing gum slab based on a scale of 0 to 100 as measured by descriptive analysis using the Quantitative Descriptive Analysis method.

The multi-textured chewing gum snack product may have a cohesiveness rating at 30 seconds from the start of chewing that is at least 5, specifically 5 to 25, and more specifically 10 to 15 points smaller than a cohesiveness rating of a traditional chewing gum slab based on a scale of 0 to 100 as measured by descriptive analysis using the Quantitative Descriptive Analysis method.

The chewing gum snack product may have an initial sensory texture attribute that is a non-cohesive chew and after ten minutes of chewing gives a sensory texture attribute that is a cohesive chew, and the transition from non-cohesive chew to cohesive chew is smooth.

The multi-textured chewing gum snack product may have a loose particulates rating upon initial chewing; that is at least 10, specifically 10 to 65, and more specifically 20 to 50 points greater than a loose particulates rating of a traditional chewing gum slab based on a scale of 0 to 100 as measured by descriptive analysis using the Quantitative Descriptive Analysis method.

The multi-textured chewing gum snack product may have a loose particulates rating at 30 seconds from the start of chewing that is at least 5, specifically 5 to 35, and more specifically 10 to 25 points greater than a loose particulates rating of a traditional chewing gum slab based on a scale of 0 to 100 as measured by descriptive analysis using the Quantitative Descriptive Analysis method.

The multi-textured chewing gum snack product may have a particle size rating upon initial chewing that is at least 8, specifically 8 to 45, and more specifically 20 to 35 points greater than a particle size rating of a traditional chewing gum slab based on a scale of 0 to 100 as measured by descriptive analysis using the Quantitative Descriptive Analysis method.

The multi-textured chewing gum snack product may have a particle size rating at 30 seconds from the start of chewing that is at least 5, specifically 5 to 30, and more specifically 10 to 20 points greater than a particle size rating of a traditional chewing gum slab based on a scale of 0 to 100 as measured by descriptive analysis using the Quantitative Descriptive Analysis method.

A region of the chewing gum composition portion can be exposed and is not completely covered by a confectionery composition portion.

The chewing gum snack product provides a consumer with the sensation of swallowing a snack food during the initial chew process, the sensation of swallowing a snack food is distinct from the sensation of swallowing increased amounts of saliva from chewing traditional chewing gum.

In an embodiment, the multi-textured chewing gum snack product comprises a chewing gum composition portion, a confectionery composition portion, and optionally a second confectionery composition portion, a second chewing gum composition portion, or a combination thereof; the chewing gum composition portion and the confectionery composition portion have different textures; and the confectionery composition portion fractures when the multi-textured chewing gum snack product is bent 90 degrees.

The multi-textured chewing gum snack product may exhibit a peak bend force of greater than 400 g-force, specifically greater than 500, more specifically greater than 600, and yet more specifically greater than 700 g-force as measured using a three point bend test using e.g. a probe speed of 0.8 mm/second and a sample support distance of 30 mm. In an embodiment, the multi-textured chewing gum snack product exhibits a peak bend force that is at least five times the peak bend force exhibited by a traditional slab chewing gum.

The multi-textured chewing gum snack product after chewing for about ten minutes, specifically about five minutes, may result in a bolus size that is about 5 to about 15 wt%, specifically about 8 to about 12 wt% of the total starting weight of the multi-textured chewing gum snack product prior to chewing.

The multi-textured chewing gum snack product may provide a sensory impression of consuming a snack product early in the chewing process, which transitions over a period of less than 120 seconds, specifically about 30 to about 90 seconds, and more specifically about 45 to about 60 seconds of chewing into a sensory impression of chewing a chewing gum.

### Appearance and format

The multi-textured chewing gum product can be formed to have the appearance, texture, and other sensory attributes of a snack product such as cookies, cookie dough and candy bars. Other shapes include French fries, snack chips (reminiscent of potato chips, corn chips, etc. having any variety of shape including round, triangular, rectangular and square).

### Indulgent Composition

There is described a multi-textured chewing gum product that has the look, taste, and initial texture of a candy bar with indulgent characteristics. The multi-textured chewing gum product can be formulated to be reminiscent of an indulgent candy product by using two or more chewing gum composition portions, each varying by texture and formulation (e.g. an indulgent chewing gum composition and a crunchy chewing gum composition, both described herein), and optionally a confectionery composition portion. A first chewing gum composition portion of the multi-textured indulgent chewing gum product can comprise an indulgent chewing gum composition, that is, one having a high content of low melting point fat. The indulgent chewing gum composition can generally comprise a bulk sweetener as described herein, a gum base as described herein, and an amount of low melting point fat, including those described herein as having a melting point of about 15 to about 50° C.

The amount of low melting point fat present in the indulgent chewing gum composition can be about 5.0 to about 35 wt% based on the total weight of the indulgent chewing gum composition, specifically about 10.0 to about 30.0, and more specifically about 15.0 to about 25.0 wt%.

The amount of bulk sweetener, specifically a sugar polyol such as xylitol, present in the indulgent chewing gum composition can be about 1.0 to about 50.0 wt% based on the total weight of the indulgent chewing gum composition, specifically about 5.0 to about 40.0, and more specifically about 10.0 to about 30.0 wt%.

The amount of gum base present in the indulgent chewing gum composition can be about 20.0 to about 70.0 wt% based on the total weight of the indulgent chewing gum composition, specifically about 25.0 to about 65.0, and more specifically about 30.0 to about 60.0 wt%.

The indulgent chewing gum composition can optionally further comprise an additional ingredient, including those described herein such as a flavorant, a high intensity sweetener, a food acid or salt thereof, a sensate, a flavor modulator or potentiator, a coloring agent, a humectant, a salt, a softener, or a combination thereof. The types of flavorants used are specifically indulgent type flavors. The amount of additional ingredients such as flavor modulators, flavor potentiators and flavorants can be a matter of preference subject to such factors as the type of final product composition, the individual flavor, and the strength of flavor desired.

A second chewing gum composition portion of the multi-textured indulgent chewing gum product can comprise a crunchy chewing gum composition. The crunchy chewing gum composition can generally comprise a bulk sweetener as described herein, a gum base as described herein, an amount of water, and optionally an additional ingredient, including those described herein including a flavorant, a high intensity sweetener, a fat, a food acid or salt thereof, a sensate, a flavor modulator or potentiator, a coloring agent, a humectant, a salt, a softener, or a combination thereof. The amount of additional ingredients such as flavor modulators, flavor potentiators and flavorants can be a matter of preference subject to such factors as the type of final product composition, the individual flavor, and the strength of flavor desired. The crunchy chewing gum is formed by preparing a homogeneous mixture of molten gum base with molten bulk sweetener as opposed to the use of crystalline or particulate bulk sweetener.

The amount of bulk sweetener, specifically a sugar polyol such as isomalt, present in the crunchy chewing gum composition can be about 35.0 to about 75.0 wt% based on the total weight of the crunchy chewing gum composition, specifically about 40.0 to about 65.0, and more specifically about 50.0 to about 60.0 wt%.

The amount of water present in the crunchy chewing gum composition can be about 5.0 to about 20.0 wt% based on the total weight of the crunchy chewing gum composition, specifically about 10.0 to about 15.0 wt%.

The amount of gum base present in the crunchy chewing gum composition can be about 10.0 to about 45.0 wt% based on the total weight of the crunchy chewing gum composition, specifically about 15.0 to about 40.0, and more specifically about 20.0 to about 35.0 wt%.

When used to prepare the multi-textured indulgent chewing gum product, any weight ratio of indulgent chewing gum composition to crunchy chewing gum composition can be used to achieve a desired texture, flavor and mouth feel. Exemplary weight ratios include about 10:90 to about 90:10 indulgent chewing gum composition to crunchy chewing gum composition, specifically about 20:80 to about 80:20, more specifically about 30:70 to about 70:30, yet more specifically about 40:60 to about 60:40, and still yet more specifically about 45:55 to about 55:45.

The multi-textured indulgent chewing gum product can be formatted in any number of ways where at least a region of one or both of the indulgent chewing gum composition and crunchy chewing gum composition portions are exposed and visible when perceived with the naked eye.

In a general process to prepare the indulgent chewing gum composition, the low melting point fat is melted and mixed with molten gum base. To the molten gum base and fat is added the bulk sweetener with mixing and any additional ingredients.

In a general process to make the crunchy chewing gum composition a bulk sweetener such as isomalt, is heated to a temperature to create a molten bulk sweetener, optionally water can be added to first dissolve the sweetener and then heated to drive off excess water to form a molten bulk sweetener. If required, the molten sweetener is cooled (e.g. to about 150 °C) and mixed with molten gum base until homogeneous. The mixture is then cooled (e.g. to about 90 °C) and additional ingredients such as flavorants etc. are added with mixing. The resulting molten mass is then cooled and formed into desired shapes.

The formation of the indulgent product may result in a piece of crunchy chewing gum surrounding a piece of indulgent chewing gum so that the indulgent chewing gum is exposed on two ends of the product, and vice versa where the crunchy chewing gum is the center. Another embodiment involves a multilayered format having alternating layers of indulgent chewing gum composition and crunchy chewing gum composition in a two, three, four, five or more layered format as long a portion of each composition is exposed and visible.

### Candy Bar Composition

There is described a multi-textured chewing gum product that has the look, taste, and initial texture of a candy bar with indulgent characteristics using two or more chewing gum composition portions, each varying by texture and formulation (e.g. an indulgent chewing gum composition and a crunchy chewing gum composition, both described herein), and a confectionery composition portion. A first chewing gum composition portion of the multi-textured candy bar chewing gum product can comprise an indulgent chewing gum composition, that is, one having a high content of low melting point fat. The indulgent chewing gum composition can generally comprise a bulk sweetener as described herein, a gum base as described herein, and an amount of low melting point fat, including those described herein as having a melting point of about 15 to about 50° C.

The amount of low melting point fat present in the indulgent chewing gum composition can be about 5.0 to about 35 wt% based on the total weight of the indulgent chewing gum composition, specifically about 10.0 to about 30.0, and more specifically about 15.0 to about 25.0 wt%.

The amount of bulk sweetener, specifically a sugar polyol such as xylitol, present in the indulgent chewing gum composition can be about 1.0 to about 50.0 wt% based on the total weight of the indulgent chewing gum composition, specifically about 5.0 to about 40.0, and more specifically about 10.0 to about 30.0 wt%.

The amount of gum base present in the indulgent chewing gum composition can be about 20.0 to about 70.0 wt% based on the total weight of the indulgent chewing gum composition, specifically about 25.0 to about 65.0, and more specifically about 30.0 to about 60.0 wt%.

The indulgent chewing gum composition can optionally further comprise an additional ingredient, including those described herein such as a flavorant, a high intensity sweetener, a food acid or salt thereof, a sensate, a flavor modulator or potentiator, a coloring agent, a humectant, a salt, a softener, or a combination thereof. The types of flavorants used are specifically indulgent type flavors. The amount of additional ingredients such as flavor modulators, flavor potentiators, and flavorants can be a matter of preference subject to such factors as the type of final product composition, the individual flavor, and the strength of flavor desired. Methods of making the indulgent chewing gum composition has been discussed above.

A second chewing gum composition portion of the multi-textured candy bar chewing gum product can comprise a crunchy chewing gum composition. The crunchy chewing gum composition can generally comprise a bulk sweetener as described herein, a gum base as described herein, an amount of water, and optionally an additional ingredient, including those described herein including a flavorant, a high intensity sweetener, a fat, a food acid or salt thereof, a sensate, a flavor modulator or potentiator, a coloring agent, a humectant, a salt, a softener, or a combination thereof. The amount of additional ingredients such as flavor modulators, flavor potentiators and flavorants can be a matter of preference subject to such factors as the type of final product composition, the individual flavor, and the strength of flavor desired. The crunchy chewing gum is formed by preparing a homogeneous mixture of molten gum base with molten bulk sweetener as opposed to the use of crystalline or particulate bulk sweetener. Methods of making the crunchy chewing gum composition has been discussed above.

The amount of bulk sweetener, specifically a sugar polyol such as isomalt, present in the crunchy chewing gum composition can be about 35.0 to about 75.0 wt% based on the total weight of the crunchy chewing gum composition, specifically about 40.0 to about 65.0, and more specifically about 50.0 to about 60.0 wt%.

The amount of water present in the crunchy chewing gum composition can be about 5.0 to about 20.0 wt% based on the total weight of the crunchy chewing gum composition, specifically about 10.0 to about 15.0 wt%.

The amount of gum base present in the crunchy chewing gum composition can be about 10.0 to about 45.0 wt% based on the total weight of the crunchy chewing gum composition, specifically about 15.0 to about 40.0, and more specifically about 20.0 to about 35.0 wt%.

The confectionery composition of the multi-textured candy bar chewing gum product can be any confectionery composition, specifically it can be a chewy caramel, a nougat, a chewy candy, or a combination thereof.

When used to prepare the multi-textured candy bar chewing gum product, any weight ratio of indulgent chewing gum composition to crunchy chewing gum composition can be used to achieve a desired texture, flavor and mouth feel. Exemplary weight ratios include about 10:90 to about 90:10 indulgent chewing gum composition to crunchy chewing gum composition, specifically about 20:80 to about 80:20, more specifically about 30:70 to about 70:30, yet more specifically about 40:60 to about 60:40, and still yet more specifically about 45:55 to about 55:45. Any weight ratio of total chewing gum composition (indulgent + crunchy) to confectionery composition can be used to achieve a desired texture, flavor and mouth feel. Exemplary weight ratios include about 10:90 to about 90:10 total chewing gum composition to confectionery composition, specifically about 20:80 to about 80:20, more specifically about 30:70 to about 70:30, yet more specifically about 40:60 to about 60:40, and still yet more specifically about 45:55 to about 55:45.

The multi-textured candy bar chewing gum product can be formatted in any number of ways where at least a region of one or both of the indulgent chewing gum composition and crunchy chewing gum composition portions are exposed and visible when perceived with the naked eye.

The formation of the candy bar product may result in at least one layer of indulgent chewing gum on top of a matrix of confectionery composition containing inclusions of crunchy chewing gum pieces. Alternatively, top and bottom layers of indulgent chewing gum can be used with the confectionery matrix/ crunchy chewing gum inclusions are in the middle so that at least a region of each portion (indulgent chewing gum, crunchy chewing gum, and confectionery composition) is exposed and visible. Embodiments where crunchy chewing gum layer(s) on a matrix of confectionery composition comprising inclusions of indulgent chewing gum pieces are also contemplated.

### Breakables Embodiment

In another embodiment, the multi-textured chewing gum product has the look, taste, and initial texture of a candy bar in a stick or bar format having multiple portions of chewing gum composition and confectionery composition. In one embodiment, the multi-textured chewing gum product can be formulated to be reminiscent of a stick candy product by using a chewing gum composition portion and a confectionery composition portion or a second chewing gum composition portion which varies from the first by any one of a texture, formulation, shape and taste.

In an embodiment, the multi-textured chewing gum product can be prepared in a candy bar format having a crunchy confectionery composition portion and a chewing gum composition portion and optionally a second crunchy confectionery composition portion. The product ("breakables") can be prepared having a multiple bite format with a primary attribute of crunchy texture imparted by the confectionery composition portion (e.g. a caramel or hard candy) and with continuous chewing it transforms into the chew texture of chewing gum.

The chewing gum composition portion of the breakables product can be prepared from any chewing gum composition. In an embodiment, the chewing gum composition of the breakables product comprises gum base as described herein, a bulk sweetener such as the sugar polyols described herein, and optionally an additional ingredient, including those described herein such as a flavorant, a high intensity sweetener, a food acid or salt thereof, a sensate, a flavor modulator or potentiator, a coloring agent, a humectant, a salt, a softener, or a combination thereof.

The amount of bulk sweetener, specifically a sugar polyol, present in a breakables chewing gum composition can be about 35.0 to about 75.0 wt% based on the total weight of the breakables chewing gum composition, specifically about 40.0 to about 65.0, and more specifically about 50.0 to about 60.0 wt%. Sugar polyol includes those described herein including isomalt, malititol, mannitol and sorbitol.

The amount of gum base present in a breakables chewing gum composition can be about 10.0 to about 55.0 wt% based on the total weight of the breakables chewing gum composition, specifically about 15.0 to about 45.0, and more specifically about 20.0 to about 40.0 wt%.

The amount of softener present in a breakables chewing gum composition can be about 2.0 to about 15.0 wt% based on the total weight of the breakables chewing gum composition, specifically about 5.0 to about 12.0, and more specifically about 7.0 to about 10.0 wt%.

The breakables chewing gum composition can be prepared using processes well known in the chewing gum art.

In an embodiment, the breakables confectionery composition portion can be prepared from any confectionery material that provides a crunchy texture such as a hard caramel or a hard candy. The breakables confectionery composition comprises a bulk sweetener such as a sugar polyol described herein, a fat as described herein including butter, and a dairy ingredient such as cream, milk, milk solids, and condensed milk. The breakables confectionery composition may further comprise an additional ingredient as described herein such as a flavorant, a high intensity sweetener, a food acid or salt thereof, a sensate, a flavor modulator or potentiator, a coloring agent, a humectant, a salt, a softener, an emulsifier, or a combination thereof.

The amount of bulk sweetener, specifically a sugar polyol such as isomalt, present in a breakables confectionery composition can be about 70.0 to about 95.0 wt% based on the total weight of the breakables confectionery composition, specifically about 75.0 to about 90.0, and more specifically about 80.0 to about 85.0 wt%.

The amount of fat, e.g. butter, palm oil, etc., present in a breakables confectionery composition can be about 3.0 to about 14.0 wt% based on the total weight of the breakables confectionery composition, specifically about 6.0 to about 12.0, and more specifically about 8.0 to about 10.0 wt%.

The amount of dairy ingredient present in a breakables confectionery composition can be about 2.0 to about 14.0 wt% based on the total weight of the breakables confectionery composition, specifically about 4.0 to about 10.0, and more specifically about 6.0 to about 8.0 wt%.

When used to prepare the multi-textured breakables chewing gum product, any weight ratio of breakables chewing gum composition to breakables confectionery composition can be used to achieve a desired texture, flavor and mouth feel. Exemplary weight ratios include about 10:90 to about 90:10 breakables chewing gum composition to breakables confectionery composition, specifically about 20:80 to about 80:20, more specifically about 30:70 to about 70:30, yet more specifically about 40:60 to about 60:40, and still yet more specifically about 45:55 to about 55:45.

The breakables confectionery composition can be prepared by heating the bulk sweetener into a molten mass; this step can also be carried out by first dissolving the bulk sweetener in water and cooking until the water has been evaporated off. If an emulsifier is used, it is added with mixing along with the fat and the dairy ingredient. The resulting mixture is cooled somewhat and any additional ingredient is added in with mixing. While still pliable, the resulting confectionery composition is formed into desired shapes.

The breakables multi-textured chewing gum product can be formed into individual pieces containing any variation of breakables chewing gum composition portion and breakables confectionery composition portion where at least a region of the breakables chewing gum composition portion is exposed and visible to the naked eye.

In one embodiment, the breakables multi-textured chewing gum product has a generally square shape and comprises a single base layer of breakables confectionery composition (substrate) and one, two or three portions of breakables chewing gum positioned on a top surface of the base layer. In an alternate embodiment, the breakables chewing gum makes up the base layer and the breakables confectionery composition are the portions on top.

In one embodiment, the breakables multi-textured chewing gum product has a generally rectangular shape and comprises a single base layer of breakables confectionery composition (substrate) and one, two or three long rectangular portions of breakable chewing gum positioned on a top surface of the base layer. In an alternate embodiment, the breakables chewing gum makes up the base layer and the breakables confectionery composition are the portions on top.

In the breakables embodiment, a drizzle of confectionery composition such as a caramel, a hard candy, etc. can be applied to a top surface of the multi-textured chewing gum product for added texture or taste. The drizzle can be considered a second confectionery composition portion.

### Cookie dough Composition

There is described a multi-textured chewing gum product has the look, taste, and initial grainy feel of raw cookie dough, but upon chewing it transforms into the chew texture of chewing gum. The cookie dough chewing gum can be prepared from a sugar polyol, gum base, an aerating agent (e.g. sodium bicarbonate), and an acidic ingredient. Exemplary sugar polyols include those sugar-free bulk sweetener discussed above, specifically isomalt. The sugar polyol can be present in the cookie dough chewing gum composition in an amount of about 40 to about 70 wt% based on the total weight of the cookie dough chewing gum composition, specifically about 45 to about 65 wt%, and more specifically about 50 to about 60 wt%.

The gum base present in the cookie dough chewing gum composition can be about 20 to about 45 wt% based on the total weight of the cookie dough chewing gum composition, specifically about 25 to about 40 wt%, and more specifically about 30 to about 35 wt%.

The amount of aerating agent present in the cookie dough chewing gum composition can be about 0.01 to about 3.5 wt% based on the total weight of the cookie dough chewing gum composition, specifically about 0.5 to about 3.0 wt%, and more specifically about 1.0 to about 2.5 wt%.

The acidic ingredient can be a food acid or salt thereof as discussed herein, or any other acidic ingredient including aspartame or other additional ingredient that is acidic. The amount of acidic ingredient present in the cookie dough chewing gum composition can be about 0.01 to about 3.0 wt% based on the total weight of the cookie dough chewing gum composition, specifically about 0.05 to about 2.0 wt%, and more specifically about 0.1 to about 1.0 wt%.

The cookie dough chewing gum composition can further include an additional ingredient, including those described herein including a flavorant, a fat, a high intensity sweetener, a sensate, a flavor modulator or potentiator, a coloring agent, a humectant, a salt, a softener, or a combination thereof. The amount of additional ingredients such as flavor modulators, flavor potentiators and flavorants can be a matter of preference subject to such factors as the type of final product composition, the individual flavor, and the strength of flavor desired.

The cookie dough chewing gum product may comprise a cookie dough chewing gum composition and a confectionery composition portion in the form of inclusions such as chocolate chips or other confectionery distributed throughout the matrix of the cookie dough chewing gum composition. Other inclusions can be included in the cookie dough chewing gum composition portion including dried fruit (e.g. raisins), nuts and coconut flakes. The inclusions can be present in the cookie dough chewing gum product in an amount of 1 to about 25 wt% based on the total weight of the cookie dough chewing gum product, specifically about 5 to about 20 wt%, and more specifically about 10 to about 15 wt%.

The cookie dough chewing gum product, with or without inclusions, may comprise a confectionery composition portion coating in the form of a glaze surrounding a part of the cookie dough chewing gum portion or surrounding all of the portion.

When used to prepare the multi-textured cookie dough chewing gum product, any weight ratio of cookie dough chewing gum composition and confectionery composition (as inclusions or coating e.g. glaze, drizzle, etc.) can be used to achieve a desired texture, flavor and mouth feel. Exemplary weight ratios include about 5:95 to about 95:5 cookie dough chewing gum composition to confectionery composition, specifically about 10:90 to about 90:10, more specifically about 20:80 to about 80:20, yet more specifically about 30:70 to about 70:30, and still yet more specifically about 40:50 to about 50:40.

In an exemplary process to make the cookie dough chewing gum product, a sugar polyol is boiled with water or melted in dry form to form a molten mass that is reduced in temperature to about 100-130 °C. Separately gum base is heated until molten and then the molten gum base and molten sugar polyol are combined and mixed. Optional additional ingredients can be added in and mixed while the material is still malleable, including flavorants and sweetener. An aerating agent such as sodium bicarbonate is then added, mixed, and the mixture is heated to 130°C to aerate. The aerated mass can be cooled and inclusions can be added in with mixing. Optionally, the malleable mixture is pulled to further aearate and grain the mass and then formed into pieces. The resulting composition has a gritty and crumbly texture.

### EXAMPLES

### Example 1. Cookie dough (Brown Autumn Spice) - comparative example

A cookie dough type product was prepared in a single bite format having a primary attribute of a soft texture, mild crunch and a graininess reminiscent of cookie dough. The cookie dough type product is prepared from a chocolate confectionery composition and a chewing gum as outlined in Tables 1. and 2. below.

**Table 1.**

| **Confectionery composition (Sugar-free chocolate) ingredient** | **Percentage** |
|---|---|
| Fat High melting | 16.3 |
| Fat, melting point 55-41°C | 13.3 |
| Mannitol | 60.4 |
| Sucralose | 0.6 |
| Cocoa powder unsweetened | 9.4 |

**Table 2.**

| **Chewing gum ingredient** | **Percentage** |
|---|---|
| Isomalt | 47.1 |
| Moisture | 1.0 |
| Gum Base | 32.1 |
| Flavor | 3.3 |
| Aspartame | 0.1 |
| Acesulfame K | 0.03 |
| Sodium bicarbonate | 0.02 |
| Sugar-free chocolate pieces | 14.4 |

The process to make the sugar free chocolate involves melting fat mixture in a pot, adding mannitol, and mixing to make slurry. The slurry is transferred to a food processor and mixed for one hour to achieve smooth texture. Sucralose and cocoa are then added and mixed for an additional 15 minutes. The chocolate is deposited on a cooling table to form into pieces ("chips").

The process to make the cookie dough chewing gum involves boiling a mixture of isomalt and water to 163 °C, then cooling down to 120 °C to form a molten isomalt mass. Molten gum base is then added to the molten isomalt and mixed. Flavor and sweetener are then added in and mixed. Sodium bicarbonate is then added, mixed, and the mixture is heated to 130°C to aerate. The aerated mass is deposited on cooling table (18°C) and cooled until the surface is 90°C. The bottom of the mass solidifies while the top and interior are still soft. The chocolate chips are added and folded into the mass. The mass is removed from the cooling table and folded to equalize the temperature throughout the mass making it stretchable. Pull to stretch the mass. The mass is placed on a table and formed into sheets to achieve a 6 mm thickness. The sheet is then cut into 2 x 1.5 centimeter (cm) pieces (about 3grams a piece).

The cookie dough type product had a texture reminiscent of cookie dough. A sensory panel characterized the sample as predominantly caramel with chocolate, nutty, coffee, and buttery notes.

### Example 2. Cookie dough (Glaze, Coffee Glaze) - comparative example

A cookie dough type product was prepared in a single bite format having a primary attribute of a soft texture, mild crunch and a graininess reminiscent of cookie dough. The cookie dough type product is prepared from a chocolate confectionery composition, a glaze confectionery composition, and a chewing gum as outlined in Tables 3. and 4. below.

**Table 3.**

| **Confectionery composition (Caramel glaze) ingredient** | **Percentage** |
|---|---|
| Isomalt | 81.0 |
| Lecithin | 0.20 |
| Cream | 6.00 |
| Butter | 8.00 |

| Preblend (flavor, isomalt, salt, and Acesulfame K) | |
|---|---|
| Flavor | 1.50 |
| Isomalt | 2.30 |
| Salt | 0.80 |
| Acesulfame K | 0.20 |

Process to make the glaze confectionery composition portion: Heat isomalt until molten (∼ 170 °C) and then cool to 130 °C, add lecithin and mix until homogeneous. Butter and cream are then added and the mixture is heated to 160 °C and held for 6 minutes. The mixture is then cooled to 100 °C and then a preblend of flavor, isomalt, Acesufame K, and salt is added and mixed.

**Table 4.**

| **Chewing gum ingredient** | **Percentage** |
|---|---|
| Isomalt | 47.1 |
| Moisture | 1.0 |
| Gum Base | 32.1 |
| Flavor | 3.3 |
| Aspartame | 0.1 |
| Acesulfame K | 0.03 |
| Sodium bicarbonate | 0.02 |
| Sugar-free chocolate pieces | 14.4 |

The process to make the cookie dough chewing gum involves boiling a mixture of isomalt and water to 163 °C, then cooling down to 120 °C to form a molten isomalt mass. Molten gum base is then added to the molten isomalt and mixed. Flavor and sweetener are then added in and mixed. Sodium bicarbonate is then added, mixed, and the mixture is heated to 130°C to aerate. The aerated mass is deposited on cooling table (18°C) and cooled until the surface is 90°C. The bottom of the mass solidifies while the top and interior are still soft. The chocolate chips are added and folded into the mass. The temperature of the mass is allowed to equalize making it stretchable. Pull to stretch the mass. The mass is placed on a table and formed into sheets to achieve a 6 mm thickness. The sheet is then cut into 2 x 1.5 centimeter (cm) pieces (about 3grams a piece). The pieces are coated with the coffee glaze to result in a product containing 66 wt% chewing gum and 33wt% confectionery (chocolate + glaze).

The cookie dough type product had a texture reminiscent of cookie dough and the glaze provides an added crunchy element. A sensory panel characterized the sample as predominantly caramel with chocolate, nutty, coffee, and buttery notes.

### Example 3. Breakables (Fruit Caramel Pear)

A candy bar type product was prepared having a multiple bite format with a primary attribute of crunchy and secondary attribute of sweet or sweet/salty, and tertiary attribute of multiflavors; highly aromatic. The Breakables (Fruit Caramel Pear) candy bar type product is prepared from a chewing gum composition and a caramel confectionery composition as outlined in Tables 5. and 6. below, and in a weight ratio of 47:53 confectionery composition:chewing gum.

**Table 5.**

| **Chewing gum ingredient** | **Percentage** |
|---|---|
| Gum base | 30.0 |
| Softeners | 8.00 |
| Polyols | 56.4 |
| Flavor | 2.50 |
| Encapsulated Aspartame | 2.4 |
| Encapsulated Acesulfame K | 0.60 |
| Sucralose | 0.06 |
| Color | 0.04 |

**Table 6.**

| **Confectionery composition (Caramel/hard candy) ingredient** | **Percentage** |
|---|---|
| Isomalt | 81.0 |
| Lecithin | 0.20 |
| Cream | 6.00 |
| Butter | 8.00 |

| Preblend (flavor, isomalt, salt, and Acesulfame K) | |
|---|---|
| Flavor | 1.50 |
| Isomalt | 2.30 |
| Salt | 0.80 |
| Acesulfame K | 0.20 |

Process to make chewing gum composition portion: Add molten gum base to a kettle. Add softeners and mix for 3-5 minutes. Add 50% of the polyols to the batch and mix for 2 minute, then add the remaining polyols and flavor to the batch and mix for 3 minutes. Add the encapsulated sweeteners to the batch and mix. The final mixture is rolled to a desired thickness.

Process to make confectionery composition portion: Heat isomalt until molten (∼ 170 °C) and then cool to 130 °C, add lecithin and mix until homogeneous. Butter and cream are then added and the mixture is heated to 160 °C and held for 6 minutes. The mixture is then cooled to 100 °C and then a preblend of flavor, isomalt, Acesufame K, and salt is added and mixed. The mixture is transferred to a cooling table, cooled and rolled gradually into the desired thickness.

The breakables product is formed into individual pieces containing a single base layer of confectionery composition (substrate) and two or three squares of chewing gum positioned on top of the base layer ("bar format"). Alternatively, the product can be formed into individual pieces containing a single base layer of confectionery composition (substrate) and two or three long rectangular stick pieces of chewing gum positioned on top of the base layer ("stick format"). A drizzle of caramel confectionery composition is applied over the composite. The formed product can be broken into smaller pieces by hand prior to consumption or eaten whole. The break specifically occurs in a gap between the chewing gum portions such that only the confectionery composition portion needs to be broken in order to form the smaller pieces.

A sensory panel characterized the sample as predominantly caramel and buttery with slight chocolate, coffee and nutty notes.

### Example 4. Breakables (Brown Caramel Marshmallow)

A candy bar type product was prepared having a multiple bite format with a primary attribute of crunchy, secondary attribute of sweet (sweet/salty), and tertiary attribute of multiflavors, highly aromatic. The Breakables (Brown Caramel Marshmallow) candy bar type product is prepared from a chewing gum composition and a caramel confectionery composition as outlined in Tables 7. and 8. below and in a weight ratio of 47:53 confectionery composition:chewing gum.

**Table 7.**

| **Chewing gum ingredient** | **Percentage** |
|---|---|
| Gum base | 30.0 |
| Softeners | 8.0 |
| Polyols | 56.4 |
| Flavor | 2.50 |
| Encapsulated Aspartame | 2.4 |
| Encapsulated Acesulfame K | 0.60 |
| Sucralose | 0.06 |
| Color | 0.04 |

**Table 8.**

| **Caramel/hard candy ingredient** | **Percentage** |
|---|---|
| Isomalt | 81.00 |
| Lecithin | 0.20 |
| Cream | 6.00 |
| Butter | 8.00 |

| Preblend (flavor, isomalt, salt, and Acesulfame K) | |
|---|---|
| Flavor | 1.50 |
| Isomalt | 2.30 |
| Salt | 0.80 |
| Acesulfame K | 0.20 |

Processes to make the chewing gum composition portion and confectionery composition portion are similar to those in Example 3. A sensory panel characterized the sample as predominantly caramel and buttery with slight chocolate, coffee and nutty notes.

### Example 5. Indulgent (Fruit Orange Creamsicle) - comparative example

A candy bar type product was prepared in a single bite format having a soft texture and an indulgent flavor. The Indulgent (Fruit Orange Creamsicle) candy bar type product is prepared from an indulgent chewing gum composition and a crunchy chewing gum composition as outlined in Tables 9. and 10. below, in a weight ratio of 53:47 indulgent chewing gum:crunchy chewing gum.

**Table 9. Gum center**

| **Chewing gum A, Indulgen**t **Ingredient** | **Percentage** |
|---|---|
| Gum base | 57.50 |
| Low Melting point Fat | 20.00 |
| Xylitol, Powder | 13.00 |
| Flavor | 3.00 |
| Encapsulated Aspartame | 2.50 |
| Encapsulated Acesulfame K | 1.00 |
| Sucralose | 0.30 |
| Salt | 0.04 |

**Table 10. Outer shell**

| **Chewing gum B, Crunchy Ingredient** | **Percentage** |
|---|---|
| Isomalt | 54.61 |
| Water | 15.00 |
| Gum base | 26.00 |

| Preblend (flavor, isomalt) | |
|---|---|
| Isomalt | 1.50 |
| Flavor | 2.50 |
| Sucralose | 0.06 |
| Acesulfame K | 0.08 |
| Aspartame | 0.25 |

The process to make the Chewing gum A, indulgent chewing gum composition involves adding melted low melting point fat gradually to molten gum base. The mixture is mixed well until smooth. The process is repeated until the low melting point fat has been depleted. Add 50% of the xylitol and 50% of the flavor to the mixture and mix, repeat step to add remaining xylitol and flavor. Allow mixture to run for 3 minutes. The remaining sweeteners are added to the batch and mixed for 3 minutes.

The process to make the Chewing gum B, crunchy chewing gum composition involves adding water and isomalt together and heating to 170 °C to remove free water. The molten isomalt is cooled to 150 °C and molten gum base is added to the molten isomalt and the batch is mixed until homogeneous. The batch is then cooled to 90 °C and the flavor-isomalt preblend is added with mixing. The remaining sweetener is added and the mass is transferred to cooling table. The mass is rolled gradually into a desired thickness.

The formation of the indulgent product involves wrapping a piece of crunchy gum around a piece of indulgent chewing gum so that the indulgent chewing gum is exposed on two ends of the product. The crunchy chewing gum of the outer shell provides a candy-like crunch which then chews into a chewing gum texture. The indulgent chewing gum center provides a soft "creamy" mouthfeel.

### Example 6. Indulgent (Brown Autumn Spice/Coco Pretzel) - comparative example

A candy bar type product was prepared in a single bite format having a soft texture and an indulgent flavor. The Indulgent (Brown Autumn Spice/Coco Pretzel) candy bar type product is prepared from an indulgent chewing gum composition and a crunchy chewing gum composition as outlined in Tables 11. and 12. below, in a weight ratio of 53:47 indulgent chewing gum:crunchy chewing gum.

**Table 11. Gum Center**

| **Chewing gum A, Indulgent Ingredient** | **Percentage** |
|---|---|
| Gum base | 57.50 |
| LM Fat | 20.00 |
| Xylitol, Powder | 13.00 |
| Flavor | 3.00 |
| Encapsulated Aspartame | 2.50 |
| Encapsulated Acesulfame K | 1.00 |
| Sucralose | 0.30 |
| Salt | 0.04 |

**Table 12. Outer shell**

| **Chewing gum B, Crunchy Ingredient** | **Percentage** |
|---|---|
| Isomalt | 54.61 |
| Water | 15.00 |
| Gum base | 26.00 |
| Preblend (flavor, isomalt) | |
| Isomalt | 1.50 |
| Flavor | 2.50 |
| Sucralose | 0.06 |
| Acesulfame K | 0.08 |
| Aspartame | 0.25 |

The processes to make the Chewing gum A, indulgent chewing gum composition and Chewing gum B, crunchy chewing gum composition are the same as in Example 5.

The crunchy chewing gum of the outer shell provides a candy-like crunch which then chews into a chewing gum texture. The indulgent chewing gum center provides a soft "creamy" mouthfeel.

### Example 7. Candy bar (Brown Coco Caramel Crunch) - comparative example

A candy bar type product was prepared in a single bite format having a moderate crunch and an indulgent flavor.

The product is prepared with top and bottom layers of sugar-free indulgent chewing gum such as Chewing gum A of Example 5, encasing a middle layer of a heterogeneous mixture of sugar-based chewy candy and crunchy balls of crunchy chewing gum such as Chewing gum B in Example 5. A chocolate drizzle is optionally applied to the top of the pieces. The product has a weight ratio of 18:82 confectionery composition to chewing gum.

A sensory panel characterized the sample as predominantly caramel with chocolate, nutty, coffee, and buttery notes.

### Example 8. Sensory Measurements: Descriptive Analysis

Various sensory properties of samples of multi-textured chewing gum snack products were investigated using a panel trained in the principles of quantitative descriptive analysis (QDA) as described by Stone & Sidel (Stone & Sidel, Sensory Evaluation Practices, 3rd ed. San Diego, CA. Elsevier Academic Press (2004)).

**Table 13**

| Sample | Description |
|---|---|
| Candy bar Brown Coco Caramel Crunch | Example 7 |
| Breakables Brown Caramel Marshmallow | Example 4 |
| Cookie Dough Glaze, Coffee Glaze | Example 2 |
| Indulgent Fruit Orange Creamsicle | Example 5 |
| Cookie Dough Brown Autumn Spice | Example 1 |
| Indulgent Brown Autumn Spice/Coco Pretzel | Example 6 |
| Breakables Fruit Caramel Pear | Example 3 |
| Comparative fruit chewing gum | Trident® Layers™ Strawberry/citrus, Chewing gum having two outer layers of chewing gum material sandwiching a center layer of flavored candy |
| Comparative pellet chewing gum | Trident® Vitality™ citrus-strawberry, a hard coated pellet chewing gum containing liquid centerfill |
| Comparative slab chewing gum | Traditional slab chewing gum, mint-chocolate flavored |

Seven multi-textured chewing gum snack products were prepared and tested for attributes of candy-like impression, crunch, cohesiveness, loose particulates, and particle size (Table13). Three comparative chewing gums were also included in the study:
Trident® Layers™ Strawberry/citrus, a chewing gum having two outer layers of chewing gum material sandwiching a center layer of flavored candy ("Comparative fruit chewing gum") 1 stick = 2.5 grams, Ingredients: Gum Base, Maltitol, Maltitol Syrup, Sorbitol, Natural and Artificial Flavoring, Mannitol, Less than 2% of: Acesulfame Potassium, Aspartame, Gelatin, Partially Hydrogenated Coconut Oil, Red 40, Red 40 Lake, Soy Lecithin and Sucralose.

Trident® Vitality™ citrus-strawberry, a hard coated pellet chewing gum containing liquid centerfill ("Comparative pellet chewing gum") 1 piece = 2.0 grams, Ingredients: Isomalt, gum base, maltitol syrup, maltitol, natural and artificial flavoring sorbitol; less than 2% of: acacia, acesulfame potassium, aspartame, candelilla wax, glycerin, sodium ascorbate, soy lecithin, sucralose, titanium dioxide, xanthan gum, yellow 5 lake and yellow 6 lake.

Traditional slab chewing gum mint-chocolate flavored ("Comparative slab chewing gum"), 1 stick = 2.7 grams; Ingredients: sorbitol, gum base, glycerol, natural and artificial flavors, less than 2% of hydrogenated starch hydrolysate, aspartame, aspartame-acesulfame, mannitol, soy lecithin, acesulfame K, artificial colors , and butylated hydroxytoluene (BHT).

Methodology: The samples were evaluated by a panel of trained sensory assessors. The vocabulary was generated via a 2-hour language development session. Eleven QDA panelists evaluated three samples per session. The samples were assessed four times for their aroma, initial flavor and texture, flavor, texture and mouth feel at initial, 1 minute, 5 minutes, and 10 minutes, with a 1 minute aftertaste. The order of sample presentation was randomized across assessors. Serving size: one piece. Length of chew: 10 minutes with 1 minute aftertaste. All attributes were rated on an unstructured line scale, then electronically quantified on a 100-point scale. Results were collected via the SIMS (Sensory Information Management System) and were analyzed with Tragon QDA® software using analysis of variance (ANOVA). The Duncan minimum significant difference was calculated in order to determine for each attribute, those samples, which were significantly different (p<0.05). The assessors provided input on characteristics including a variety of texture/mouthfeel attributes such as candy-like impression, crunch, cohesiveness, loose particulates, and particle size; a variety of aroma attributes; and a variety of flavor attributes.

The texture/mouthfeel attributes were useful indicators of whether a product exhibited more snack-like characteristics as opposed to more chewing gum-like characteristics.

The candy-like impression was evaluated at time "initial" and 30 seconds after start of chewing. Crunchy was only evaluated up to one minute when difference of crunchy versus noncrunchy became less. Cohesiveness was evaluated up to ten minutes when all the samples had similar cohesiveness. However, the cohesiveness of the examples was quite different before one minute and ten minutes compared to the cohesiveness of the comparative examples before one minute and at ten minutes.

The attribute definitions were as follows:

### INITIAL TEXTURE/MOUTHFEEL

Instructions: For initial hardness, crumble, crystal particulates the sample should be placed in the side of the mouth and bitten with the side teeth:

| **Attribute** | **Definition** |
|---|---|
| CANDY-LIKE (gumlike-candy-like) | Measure of how much the sample is perceived as similar to candy or similar to gum. |
| INITIAL CRUNCH (slightly-very) | Degree of crunching sound the sample makes upon chewing, from slightly to very loud/crunchy. |
| COHESIVE (falls apart/stringy-very cohesive) | Degree of compactness of the gum and to which the chewed sample holds tight together in a mass. |
| LOOSE PARTICLES (some-many) | Measure of the amount of loose particles that are floating around the mouth or throat (even though the gum is holding together), from note to many. Reminiscent of RAZZLES. |
| INITIAL PARTICLE SIZE (small-large) | Measure of size of particulates felt in the mouth. |

Instructions: Continue chewing 3-5 times to evaluate the following:

| **Attribute** | **Definition** |
|---|---|
| COHESIVE (falls apart/stringy-very cohesive) | Degree of compactness of the gum and to which the chewed sample holds tight together in a mass. |

Continue to chew and rate the following attributes at 30 seconds.

| **Attribute** | **Definition** |
|---|---|
| CRUNCH (slightly-very) | Degree of crunching sound the sample makes upon chewing, from slightly to very loud/crunchy. |
| LOOSE PARTICLES (some-many) | Measure of the amount of loose particles that are floating around the mouth or throat (even though the gum is holding together), from note to many. Reminiscent of RAZZLES. |
| INITIAL PARTICLE SIZE (small-large) | Measure of size of particulates felt in the mouth from small to large. |
| CANDY-LIKE (gumlike-candy-like) | Measure of how much the sample is perceived as similar to candy or similar to gum. |

### TEXTURE/MOUTHFEEL

Instructions: Continue chewing the sample to evaluate the following texture attributes:

| **Attribute** | **Definition** |
|---|---|
| CRUNCH (slightly-very) | Degree of crunching sound the sample makes upon chewing, from slightly to very loud/crunchy. |
| PARTICLE SIZE (small-large) 1 minute | Measure of size of particulates felt in the mouth from small to large. |
| COHESIVE (falls apart/stringy-very cohesive) | Degree of compactness of the gum and to which the chewed sample holds tight together in a mass. |

Tables 14.-18. provide the results of the sensory study.

**Table 14. Candy-like Impression**

| **Sample** | **Initial** | **30 seconds** |
|---|---|---|
| Candy bar Brown Coco Caramel Crunch | 52.19 | 20.99 |
| Breakables Brown Caramel Marshmallow | 74.54 | 44.90 |
| Cookie Dough Glaze, Coffee Glaze | 48.27 | 22.70 |
| Indulgent Fruit Orange Creamsicle | 60.60 | 33.47 |
| Cookie Dough Brown Autumn Spice | 35.24 | 21.56 |
| Indulgent Brown Autumn Spice/Coco Pretzel | 55.85 | 26.40 |
| Breakables Fruit Caramel Pear | 75.75 | 44.39 |
| Comparative fruit chewing gum | 11.43 | 8.02 |
| Comparative pellet chewing gum | 22.44 | 12.24 |
| Comparative slab chewing gum | 9.76 | 9.86 |

**Table 15. Crunchy Impression**

| **Sample** | **Initial** | **30 seconds** | **60 seconds** |
|---|---|---|---|
| Candy bar Brown Coco Caramel Crunch | 33.10 | 13.63 | 5.86 |
| Breakables Brown Caramel Marshmallow | 81.06 | 54.84 | 18.09 |
| Cookie Dough Glaze, Coffee Glaze | 42.60 | 21.80 | 8.56 |
| Indulgent Fruit Orange Creamsicle | 66.67 | 42.11 | 12.81 |
| Cookie Dough Brown Autumn Spice | 15.32 | 7.89 | 4.74 |
| Indulgent Brown Autumn Spice/Coco Pretzel | 56.45 | 33.53 | 10.63 |
| Breakables Fruit Caramel Pear | 75.05 | 50.76 | 16.59 |
| Comparative fruit chewing gum | 4.76 | 4.45 | 3.97 |
| Comparative pellet chewing gum | 59.90 | 31.49 | 7.59 |
| Comparative slab chewing gum | 4.72 | 8.97 | 4.19 |

**Table 16. Cohesiveness Impression**

| **Sample** | **Initial** | **5 seconds** | **30 seconds** | **60 seconds** | **5 minutes** | **10 minutes** |
|---|---|---|---|---|---|---|
| Candy bar Brown Coco Caramel Crunch | 45.22 | 65.05 | 70.41 | 76.02 | 78.42 | 79.31 |
| Breakables Brown Caramel Marshmallow | 29.39 | 46.25 | 57.18 | 73.24 | 77.28 | 79.03 |
| Cookie Dough Glaze, Coffee Glaze | 48.12 | 66.49 | 71.19 | 74.57 | 75.74 | 76.21 |
| Indulgent Fruit Orange Creamsicle | 28.35 | 51.52 | 61.41 | 72.80 | 79.12 | 81.02 |
| Cookie Dough Brown Autumn Spice | 55.97 | 67.44 | 71.29 | 72.50 | 77.33 | 79.66 |
| Indulgent Brown Autumn Spice/Coco Pretzel | 35.86 | 58.72 | 67.34 | 75.28 | 77.55 | 78.14 |
| Breakables Fruit Caramel Pear | 32.11 | 51.88 | 61.90 | 77.55 | 78.18 | 78.99 |
| Comparative fruit chewing gum | 75.70 | 81.55 | 81.50 | 81.19 | 80.44 | 80.31 |
| Comparative pellet chewing gum | 58.72 | 69.95 | 74.58 | 79.75 | 78.78 | 79.19 |
| Comparative slab chewing gum | 71.72 | 78.13 | 78.94 | 79.83 | 79.71 | 79.54 |

**Table 17. Loose Particulates Impression**

| **Sample** | **Initial** | **30 seconds** |
|---|---|---|
| Candy bar Brown Coco Caramel Crunch | 28.76 | 14.41 |
| Breakables Brown Caramel Marshmallow | 60.61 | 34.21 |
| Cookie Dough Glaze, Coffee Glaze | 34.32 | 15.94 |
| Indulgent Fruit Orange Creamsicle | 58.66 | 30.04 |
| Cookie Dough Brown Autumn Spice | 23.60 | 9.41 |
| Indulgent Brown Autumn Spice/Coco Pretzel | 52.03 | 23.54 |
| Breakables Fruit Caramel Pear | 62.52 | 32.32 |
| Comparative fruit chewing gum | 3.04 | 3.04 |
| Comparative pellet chewing gum | 27.92 | 13.56 |
| Comparative slab chewing gum | 3.01 | 2.70 |

**Table 18. Particle Size Impression**

| **Sample** | **Initial** | **30 seconds** | **60 seconds** |
|---|---|---|---|
| Candy bar Brown Coco Caramel Crunch | 28.47 | 13.33 | 5.52 |
| Breakables Brown Caramel Marshmallow | 43.90 | 28.29 | 12.38 |
| Cookie Dough Glaze, Coffee Glaze | 23.75 | 15.60 | 5.16 |
| Indulgent Fruit Orange Creamsicle | 44.19 | 26.84 | 9.50 |
| Cookie Dough Brown Autumn Spice | 17.60 | 10.39 | 4.45 |
| Indulgent Brown Autumn Spice/Coco Pretzel | 39.16 | 21.56 | 9.44 |
| Breakables Fruit Caramel Pear | 45.69 | 26.51 | 12.21 |
| Comparative fruit chewing gum | 3.66 | 3.35 | 3.14 |
| Comparative pellet chewing gum | 20.96 | 12.35 | 6.44 |
| Comparative slab chewing gum | 3.26 | 2.86 | 2.60 |

The results of the sensory study revealed the attributes contributing most to a candy-like impression were initial break/fracture, multi-textural experience, crunchy, loose particulates, particle size, and cohesiveness. Also, samples perceived as initially least cohesive and highest in the attributes previously mentioned gave the highest candy-like impression. In comparison, the comparative fruit chewing gum and slab chewing gum scored very low in candy-like impression. The comparative pellet chewing gum also scored fairly low in candy-like impression, instead giving an impression of a chewing gum product.

Changes in the attributes of candy-like impression, crunchy, and cohesive impression were indicative of a transition over time of a snack-like texture to an eventual texture of chewing gum as much of the confectionery portion is consumed and swallowed.

### Example 9. Flexural Strength - comparative example

The flexural strength (bend strength) of a chewing gum snack product and a comparative traditional chewing gum stick was measured. The chewing gum snack product tested was the candy bar type rectangular stick piece of Example 3 containing a caramel drizzle. The comparative sample was a stick of traditional chewing gum, a chewing gum without a confectionery composition portion and without a second chewing gum composition portion.

The test method is a three point bend test. The sample is placed across two supports distanced 30 mm apart and a probe speed of 0.8 mm/second is used. The probe is TA-92 blade probe from Texture Technologies, Scarsdale, NY. Bend force (the sample's resistance to bending), displacement (probe movement), and time are measured. The sample of Example 3 was tested two ways: the chewing gum side facing the probe and the confectionery side facing the probe. The magnitudes of the maximum bend force for both measurements of Example 3 were much higher than the maximum bend force for the comparative chewing gum by a factor of 5 or more. There are multiple peaks for Example 3 versus only one for the comparative chewing gum and the peaks are much sharper than the comparative gum, thus showing the chewing gum snack product is more brittle and the consumer experiences multiple breaks in initial chews. The enhanced brittleness of gums like Example 3 is also demonstrated by its lower bending deformation (less probe movement) before break. Compared to the comparative chewing gum, Example 3 had about half as much bending deformation before break.

The above described test can also be used with samples less than 30mm long by moving the supports towards each other so that the sample rests on both supports so that about 15% of the sample length extends over each support.

### Example 10. Initial Crunch, Texture Analyzer Test

Exemplary samples of multi-textured chewing gum products were analyzed for initial crunch using a method that can both qualitatively and quantitatively differentiate between the initial texture for samples of traditional chewing gum (comparative samples) and samples of the multi-textured chewing gum products. The multi-textured chewing gum products tested and commercially available comparative chewing gum are set out in Table 19. The multi-textured chewing gum products are exemplary in nature and should in no way limit the scope of the multi-textured chewing gum products as disclosed herein.

**Table 19.**

| **Sample** | |
|---|---|
| Cookie Dough Vanilla Chocolate Caramel | Described below |
| Indulgent Orange Cream | Described below |
| Candy bar | Described below |
| Breakables | Described below |

| **Comparative samples** | **Description** |
|---|---|
| "Comparative mint/melon chewing gum" or "C1" | Trident® Layers™ CoolMint+Melon Fresco, a chewing gum having two outer layers of chewing gum material sandwiching a center layer of flavored candy 1 stick = 2.5 grams, Ingredients: Gum base, maltitol, maltitol syrup, sorbitol, mannitol, natural and artificial flavoring, less than 2% of acesulfme potassium, aspartame, blue 1, blue1 lake, gelatin, partially hydrogenated coconut oil, soy lecithin, sucralose and yellow 5. |
| "Comparative chewing gum with inclusions" or "C2" | Ice Breakers™ Ice Cubes Spearmint, cube-shaped chewing gum containing "flavor crystals"; |
| | Ingredients: xylitol, gum base, maltitol syrup, mannitol, contains 2% or less of: natural and artificial flavor, gum acacia, maltodextrin, soy lecithin, artificial color (blue 1 lake, yellow 5 lake, blue 1, yellow 5), aspartame, gelatin, acesulfame potassium, neotame, BHT, and sucralose. |
| "Comparative mint pellet chewing gum" or "C3" | Dentyne Ice™, Mint Frost a hard coated pellet chewing gum, 1 piece = 1.5 grams, Ingredients: sorbitol, gum base, maltitol, mannitol, artificial and natural flavoring, less than 2% of: acacia, acesulfame potassium, aspartame, BHT, candelilla wax, glycerin, soy lecithin, sucralose, and titanium dioxide. |
| "Comparative spearmint slab chewing gum" or "C4" | STRIDE™ Spearmint Traditional slab chewing gum, 1 stick = 1.9 grams Ingredients: sorbitol, gum base, glycerin, mannitol, xylitol, natural and artificial flavoring, less than 2% of: acesulfame potassium, aspartame, BHT, blue 1 lake, soy lecithin and yellow 5 lake. |

### Cookie Dough Vanilla Chocolate Caramel

The Cookie Dough Vanilla Chocolate Caramel sample was prepared using the chewing gum composition of Table 20, the chocolate of Example 1, Table 1. and the glaze of Example 2, Table 3.

**Table 20.**

| **Chewing gum ingredient** | **Percentage** |
|---|---|
| Isomalt | 55.0 |
| Moisture | 1.1 |
| Gum Base | 37.4 |
| Flavor (vanilla) | 3.9 |
| High intensity sweetener | 0.3 |
| Sodium bicarbonate | 2.3 |
| Total | 100 |

The chewing gum composition was prepared using the same procedure as in Example 1. The final cookie dough product contained 86.8 wt% chewing gum composition from Table 20, 9.7 wt% chocolate, and 3.5 wt% glaze.

### Indulgent Orange Cream

The Indulgent Orange Cream product was prepared using procedures according to Example 5 to prepare a single bite format made from an indulgent chewing gum composition and a crunchy chewing gum composition as outlined in Tables 21 and 22 below, in a weight ratio of 53:47 indulgent chewing gum:crunchy chewing gum.

**Table 21. Gum center**

| **Chewing gum A, Indulgent Ingredient** | **Percentage** |
|---|---|
| Gum base | 60 |
| Low Melting point Fat | 22 |
| Xylitol, Powder | 11 |
| Flavor (orange) | 2.4 |
| Encapsulated High intensity sweetener | 3.1 |
| High intensity sweetener | 0.7 |
| Encapsulated food acid | 0.8 |

**Table 22. Outer shell**

| **Chewing gum B, Crunchy Ingredient** | **Percentage** |
|---|---|
| Isomalt | 53.06 |
| Water | 14.7 |
| Gum base | 24.4 |

| Preblend (flavor, isomalt) | |
|---|---|
| Isomalt | 3.8 |
| Flavor (orange) | 2.21 |
| Color | 0.05 |
| High intensity sweetener | 0.08 |
| Food acid | 1.7 |

The Indulgent Orange Cream sample format was prepared as in Example 5 to have a layer of crunchy gum around a center of indulgent chewing gum so that the indulgent chewing gum center is exposed on two sides of the product.

### Candy bar

The Candy bar product sample was prepared similar to the format in Example 7 and made from an indulgent chewing gum composition according to Table 23, a crunchy chewing gum composition according to Table 24, a chewy caramel, and a chocolate (drizzle). The weight% of each component of the final product was 23 wt% indulgent gum, 59 wt% crunchy gum, 16 wt% caramel, and 2 wt% chocolate.

The indulgent chewing gum composition of Table 23 and the crunchy chewing gum of Table 24 were prepared by the processes according to Example 5.

**Table 23.**

| **Chewing gum A, Indulgent Ingredient** | **Percentage** |
|---|---|
| Gum base | 60 |
| Low Melting point Fat | 25 |
| Xylitol, Powder | 7.25 |
| Flavor (marshmallow) | 3.0 |
| Encapsulated High intensity sweetener | 3.5 |
| High intensity sweetener | 0.75 |
| Color | 0.5 |

**Table 24.**

| **Chewing gum B, Crunchy Ingredient** | **Percentage** |
|---|---|
| Isomalt | 52.4 |
| Water | 14.5 |
| Gum base | 29.04 |

| Preblend (flavor, isomalt) | |
|---|---|
| Isomalt | 1.57 |
| Flavor (roasted peanut) | 2.27 |
| Salt | 0.08 |
| High intensity sweetener | 0.14 |

The chewy caramel composition was prepared from glucose syrup, sweetened condensed skim milk, sugar vegetable oil (palm, peanut), sorbitol, whey powder, cream, whey, butter, salt, cane sugar syrup, soy lecithin and flavor.

The candy bar product is prepared with top and bottom layers of the indulgent chewing gum of Table 23, and a middle layer of a mixture of the chewy caramel composition and pieces of crunchy chewing gum of Table 24. To make the mixture, the chewy caramel is melted and mixed with generally spherical pieces of crunchy chewing gum about 8 millimeters in diameter. The caramel/crunchy chewing gum mixture is cooled and formed into the composite with the top and bottom layers of the indulgent chewing gum. A chocolate drizzle is applied to the top of the pieces. The product has a weight ratio of 18:82 total confectionery composition to total chewing gum composition.

### Breakables

A Breakables sample in a stick format was prepared with a chewing gum composition as set out in Table 25 and a caramel confectionery composition according to Example 3, Table 6. The weight ratio of the product was 51:49 confectionery composition : chewing gum.

**Table 25.**

| **Chewing gum ingredient** | **Percentage** |
|---|---|
| Gum base | 29 |
| Softeners | 7.85 |
| Polyols | 57.13 |
| Flavor (marshmallow) | 2.15 |
| High intensity sweetener | 0.53 |
| Encapsulated high intensity sweetener | 3.18 |
| Color | 0.16 |

The process to make the chewing gum composition is the same as in Example 3.

The breakables product is formed into individual pieces in stick format containing a single rectangular base layer of confectionery composition (substrate) and a single rectangular piece of chewing gum positioned on top of the base layer ("stick format"). A drizzle of caramel confectionery composition is applied over the top surface of the composite such that the chewing gum portion remains exposed. The piece dimensions were 63 mm long, 6.9 mm wide, with a 3.07 mm thick caramel substrate and a 3.7 mm thick chewing gum top layer.

### Initial Crunch, Texture Analyzer Test

The initial crunch of the samples were measured using a texture analyzer (TA.XT.Plus Texture Analyser from Stable Micro Systems) with a 2 millimeter (mm) probe (cylinder, length of 25 mm) at a 1 millimeter/second probe speed and 95% probe penetration (95% of sample is being penetrated with the probe in the direction of the applied force). The sample is analyzed and the force resistance of samples is recorded as a function of time and/or penetration. The results are reported in stress versus probe penetration (%) curves. Eight runs per sample type were performed.

Stress versus probe penetration (%) curves for traditional chewing gum behave like the dashed lines shown in Figures 1-4. The curves do not show any anomalies. The stress increase at large strains (>80%) is related to the probe compressing the material against the platen.

Multi-textured chewing gum products having a chewing gum portion and a confectionery composition portion or a second chewing gum portion behave similarly to the solid lines depicted in Figures 1-4. These curves have multiple peaks or "distinct events" on the stress-strain curves. Probe penetration % is the percent of the thickness through which the probe has penetrated into the sample in the direction of the applied force. The shape and magnitude of the peaks will vary and depend on types of each portion (size, shape, e.g. layers or inclusions); type of composition (e.g. hard candy, soft candy, chocolate, chewing gum); amount of each portion. The peaks correlate to the different senses perceived when a consumer performs a single bite on a sample. For all samples the stress increases as 100% strain is reached due to the fact that the probe is approaching the surface of the platen.

The results of the Initial Crunch, Texture analyzer Test are provided in Table 26 along with the results for the comparative chewing gums C1-C4.

In Table 26, the "Ratio of maximum stress value/minimum stress value between 20 and 80% probe penetration" means the ratio of the highest stress value to the lowest stress value within the portion of the stress versus probe penetration (%) curve that corresponds to 20% to 80% probe penetration into the sample.

In Table 26, the "Range 20% to 80%, in million Pa" means the highest stress value minus the lowest stress value reported in million Pascals in the portion of the stress versus probe penetration (%) curve that corresponds to 20% to 80% probe penetration.

The stress versus probe penetration (%) curves may have both negative (downward) and positive (upward) slopes. In Table 26, the "# of changes in slope direction" means the number of changes in the stress versus probe penetration (%) curve from a negative to a positive slope or vice versa.

In Table 26, the question "Is there at least one negative (downward) slope covering a range of at least 1 million Pa?" asks if the stress is reduced by at least 1 million Pascals from a peak of a negative slope to where the curve changes to a positive slope or the curve ends.

In Table 26, the question "Is at least 2 million Pa stress required between 0 and 10% probe penetration?" asks if the highest stress value between 0 and 10% probe penetration into the sample is at least 2 million pascals.

In Table 26, the question "Is at least 4 million Pa stress required between 0 and 10% probe penetration?" asks if the highest stress value between 0 and 10% probe penetration into the sample is at least 4 million pascals.

In Table 26, the question "Is there a peak (stress) of at least 2 million Pa between 30 and 60% probe penetration?" asks if the highest stress value between 30 and 60% probe penetration into the sample is at least 2 million pascals.

In Table 26, the question "Is there a secondary peak (stress) greater than an initial peak (stress) by at least 0.25 million Pa?" asks if there are at least two local maxima in the stress versus probe penetration (%) curve, the peak having a positive slope on one side and a negative slope on the other side, wherein the secondary peak (stress) occurs at a higher probe penetration (%) and is greater in intensity than the initial peak (stress) by at least 0.25 million Pa.

**Table 26.**

| **Sample** | **Cookie Dough** | **Indulgent** | **Candy bar** | **Breakables** | **C1** | **C2** | **C3** | **C4** |
|---|---|---|---|---|---|---|---|---|
| Ratio of maximum stress value/minimum stress value between 20 and 80% probe penetration | At least 4.4 | At least 10 | At least 6 | At least 4 | Less than 2 | About 1 | Less than 5.5 | Less than 2 |
| Range 20% to 80%, in million Pa [high minus low] | At least 3.5 | At least 10 | At least 10 | At least 10 | Less than 1.5 | Less than 0.5 | Less than 6 | Less than 2 |
| # of changes in slope direction | >2 | >2 | >2 | >2 | 0 | >2 | >2 | 0 |
| Is there at least one negative (downward) slope covering a range of at least 1 million Pa? | yes | yes | yes | yes | no | no | yes | no |
| Is at least 2 million Pa stress required between 0 and 10% probe penetration? | yes | yes | yes | yes | no | no | yes | no |
| Is at least 4 million Pa stress required between 0 and 10% probe penetration? | yes | yes | yes | yes | no | no | yes | no |
| Is there a peak (stress) of at least 2 million Pa between 30 and 60% probe penetration? | yes | no | yes | no | no peak | no | yes | no peak |
| Is there a secondary peak (stress) greater than an initial peak (stress) by at least 0.25 million Pa | yes | yes | yes | yes | no | no | no | no |

As shown in Figure 1, the cookie dough stress-strain curve exhibits multiple distinct events (multiple peaks) as shown by the traces in solid lines. The fractures are not as sharp, which means that the fracture is not as brittle; however their stress magnitude is much greater than that of conventional chewing gum samples shown in dashed lines.

Figure 2 is the curve for indulgent orange cream which shows evidence of two major events at the beginning and end of the test (solid lines). The curves for conventional chewing gum samples are shown in dashed lines.

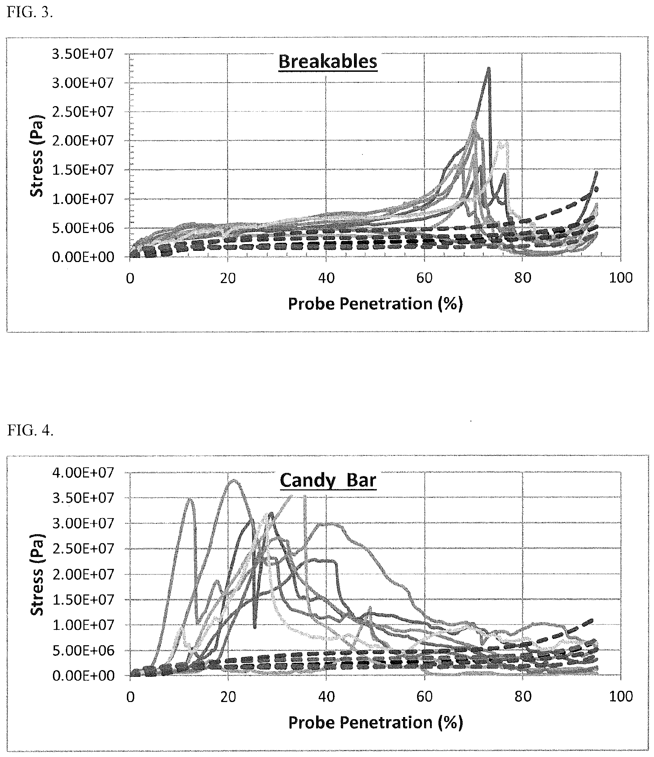

Figure 3 is the stress-strain curve for breakables which exhibits a major event as shown by the solid lines relating to the multiple chewing gum and confectionery portions. Sudden, brittle fractures are observed; these are manifested by the "sharp" increase and drop in stress. The curves for conventional chewing gum samples are shown in dashed lines.

Figure 4 is the stress-strain curve for the multi-textured chewing gum product called candy bar which exhibits multiple distinct events as shown by the solid lines. Sometimes the fractures are brittle/sharp as manifested by the sharp drop is stress and sometimes the fracture is not as brittle, thus a sharp stress drop is not observed. Their stress magnitude is much greater than that of conventional chewing gum samples shown in dashed lines.

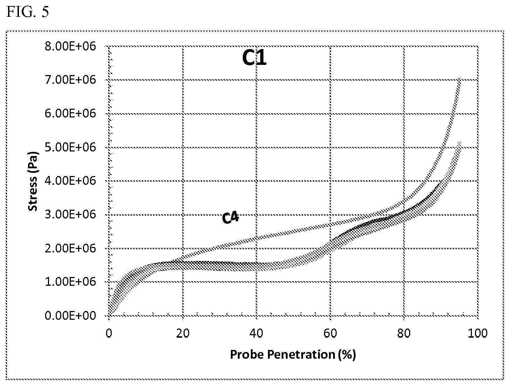

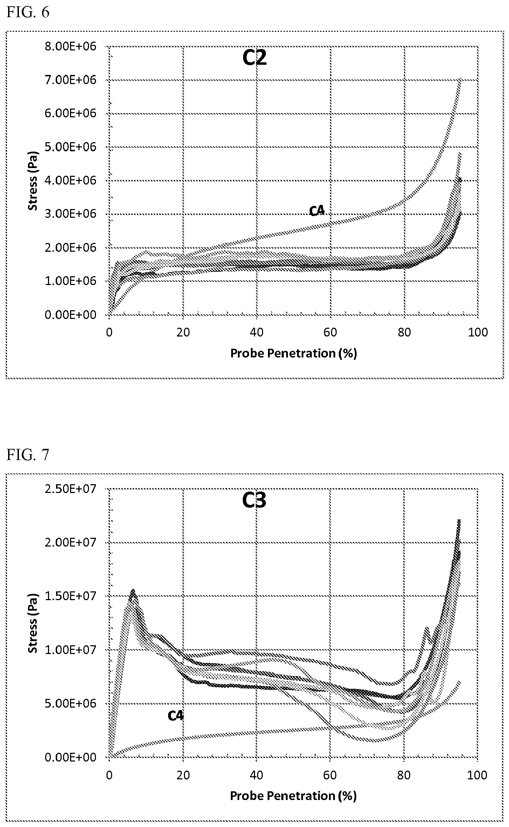

The results of the comparative chewing gums are shown in Figures 5-8. C1 and C4 differ from the multi-textural chewing gum products by the complete lack of peaks in the stress-strain curve. C2, which is advertised as containing "flavor crystals" exhibit some minor peaks, but the magnitude is much smaller than what is exhibited by the multi-textural chewing gum product samples. The hard coated pellet gum C3 is the only comparative sample showing the presence of a peak in the stress-strain curve, which is due to the hard outer coating that completely surrounds the chewing gum pellet.

### Example 11. Crunch to Chew, Brabender Torque Test

Samples of multi-textured chewing gum products and comparative chewing gums as set out in Example 10 were analyzed for texture transition from first crunch to chew using a Brabender Torque Test. The method involves continuously mixing/deforming samples in a Brabender Do-Corder mixer to measure the resistance to deformation. Torque resistance to deformation was measured and recorded. The method can both qualitatively and quantitatively differentiate between the texture for samples of traditional chewing gum and samples of the multi-textured chewing gum products. The qualitative differentiation is manifested by fluctuations and "events" on the Torque-Time curves. The quantitative differentiation is a measure of percent increase in torque value from torque at start [(Max Torque - Initial Torque)/Initial Torque]x100. The experimental parameters are set out in Table 27. A minimum of 6 runs per sample were performed.

**Table 27.**

| | |
|---|---|
| Water flow: | No water, dry mixing |
| Sample loading: | All sample loaded before the start |
| Sample weight: | 40-50 grams |
| Mixing screws: | Roller mixing blades |
| Temperature: | 25 °C |

The results for the most representative run are reported in Table 28, all torque values are in newton meter (N.m). "% increase in torque" means [(Maximum Torque - Initial Torque)/Initial Torque]x100 between time zero and 5 minutes; a zero value means the maximum and initial torque are equal. "% variation in torque max:min" means ([(Maximum Torque - Minimum Torque)/Minimum Torque] x 100 between time zero and 5 minutes). In Table 28, the inquiry "Is the initial torque lower than equilibrium torque?" asks if the initial torque is lower than the torque at 5 minutes of mixing.

**Table 28.**

| **Sample** | **Cookie Dough** | **Indulgent Orange Cream** | **Candy bar** | **Breakables** | **C1** | **C2** | **C3** | **C4** |
|---|---|---|---|---|---|---|---|---|
| Initial torque (N.m) | 228 | 106 | 89 | 102 | 179 | 157 | 194 | 254 |
| Torque at 5 minutes (N.m) | 109 | 100 | 105 | 113 | 111 | 130 | 152 | 122 |
| Maximum torque N.m within first 5 minutes (N.m) | 228 | 112 | 110 | 158 | 179 | 164 | 234 | 254 |
| Minimum torque within first 5 minutes (N.m) | 109 | 100 | 89 | 102 | 110 | 130 | 152 | 122 |
| % increase in torque | 0 | 6 | 24 | 55 | 0 | 4 | 21 | 0 |
| % variation in torque max:min | >100 | 12 | 24 | 55 | 63 | 26 | 54 | >100 |
| Is the initial torque lower than equilibrium torque (torque at 5 minutes)? | no | no | yes | yes | no | no | no | no |

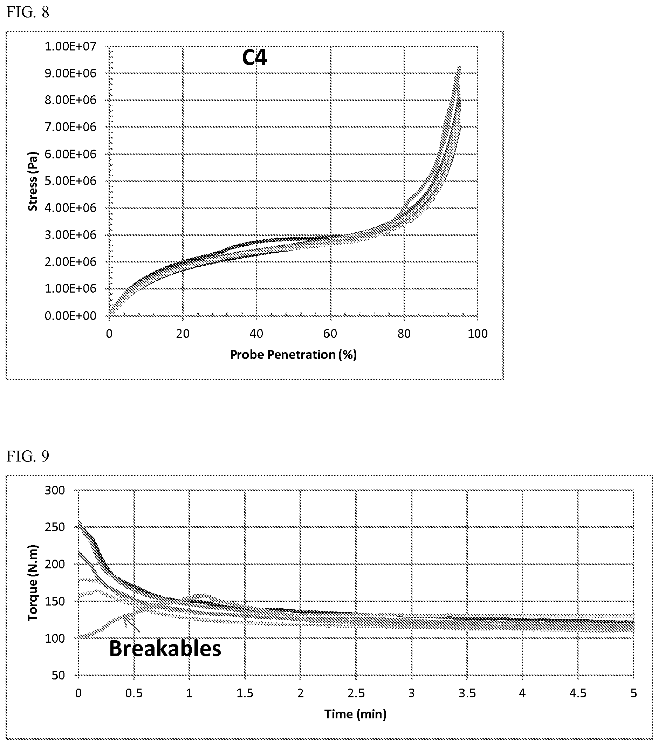

Traditional chewing gum samples exhibit traces as shown in Figure 9 (the lines starting at > 150 N.m torqe (change to torque) at time 0). Multi-textured chewing gum products having e.g. a confectionery composition portion and a chewing gum composition portion exhibit traces such as the dark line in Figure 9 for the breakables product. The initial increase of torque varies from sample to sample due to differences in the types and amounts of confectionery composition portions and chewing gum composition portions used. Not wishing to be bound by theory, but the initial increase in torque may be explained as while mixing, the structure of confectionery composition portion is broken down, their surface area increases and the mixture behaves more like a dispersion. This means that as the surface area increases the viscosity (torque resistance) increases to a maximum value. After the maximum value, the structural breakdown of the chewing gum portion is more dominant, hence the observed slower torque decay over time. The torque fluctuations can be linked to the differences in consumer perception of texture while chewing, such as transition from a crunchy to a chewy texture.

The indulgent orange cream product exhibited very little change in torque throughout the entire duration of mechanical chewing where the change in torque for the first five minutes is less than 15%. This translates into a very smooth chew experience.

### Example 12. Surface Roughness, Profilometer Test

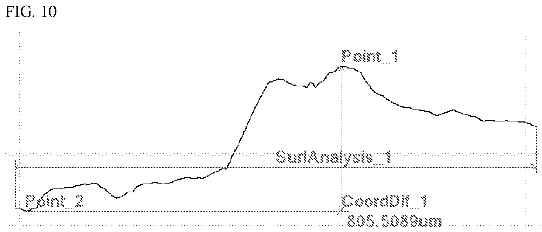

Samples of multi-textured chewing gum products and comparative chewing gums as set out in Example 10 were tested for surface roughness using a Mitutoyo profilometer (SURFTEST SV-3100). The multi-textured chewing gum products exhibit anomalous and rough surfaces. Thus, the parameter of interest was the distance between an upper peak (Point 1) and a lower valley (Point 2) of the surface (See Figure 10 Surface Roughness). For each format (e.g. breakables format, cookie dough format, etc.), five samples were used and three measurements were taken on each sample for a total of fifteen measurements for each format. For each measurement, the probe (starting point) was placed on a different point on the sample. A scan speed of 0.5 millimeter/second was used and the scan length was 4 mm or 12 mm for larger samples. The obvious top surface of the sample was scanned. The average Peak-to-Valley difference micrometers along with the standard deviation are provided in Table 29.

**Table 29.**

| **Sample** | **Cookie Dough** | **Indulgent Orange Cream** | **Candy bar** | **Breakables** | **C1** | **C2** | **C3** | **C4** |
|---|---|---|---|---|---|---|---|---|
| Top surface, micrometers | 700 | 352 | 717 | 1415 | 215 | 522 | * | 232 |
| STD Dev | 288 | 137 | 177 | 147 | 65 | 189 | | 14 |

| | | | | | | | | |
|---|---|---|---|---|---|---|---|---|
| * Not measured due to the presence of a smooth hard panned coated surface. | | | | | | | | |

As can be seen by the results, many of the multi-textured chewing gum products have significantly more surface anomalies compared to traditional chewing gum such as comparative example C4.

### Example 13. Duration of Crunch, Brabender Smear Test

Samples of multi-textured chewing gum products and comparative chewing gums as set out in Example 10 were tested for duration of crunch using a Brabender Smear Test involving mechanical chewing of the sample in a brabender. At various time intervals of mechanical chewing, the samples of multi-textured chewing gum product can be visually compared to mechanically chewed conventional chewing gum control samples.

The test involves added sample to a 60-90cc Brabender (Brabender Type: C.W. Brabender, Prep Center, Serial # 586/PE, Type # D-51-T; C.W. Brabender mixing head Type #R.E.E.6/3 230V 15A, Serial Number # A.A. 1237 S.B. with Head Capacity of 60-90 cubic centimeter) and mechanically chewing the sample for 2, 6, 10, and 14 minutes according to the parameters set out in Table 30.

**Table 30.**

| | |
|---|---|
| Water flow: | Circulator pump at 80 milliliters/minute |
| Sample loading: | All sample loaded before the start |
| Sample weight: | 120-280 grams, to ensure a full mixing head with samples |
| Mixing screws: | Sigma blades |
| Temperature: | 21-24 °C |
| RPM: | 40 |

The procedure involves setting up the circulation pump so one circulation line end is in the clean water pumping it in to the Brabender head, and a second line end is at the Brabender head pumping the water out of the Brabender head to a waste container.

The circulation pump is turned on, and as the pumps starts, the sample loading is started. Turn the Brabender drive on and set it at 40 RPM going forward. Weigh the appropriate sample amount into weighing dish (sample size will vary based on the sample type and shape - what is needed is enough samples to fill the head without it running empty or partially full). Using a timer - within 3-5 minutes load the samples into the Brabender head while the Brabender is running. The time will vary based on the gum type, format, and shape, but will remain constant within the same type. Once the sample is completely added, reset the timer and this will be considered the start time, i.e. the point in time where the chewing process with the Brabender is started. The sample will be chewed for 2 minutes, 6 minutes, 10 minutes, and 14 minutes from the time the sample was completely added to the Brabender head (the start time). Each time point will require fresh sample from start to end. Once the sample is chewed for the time point (2, 6, 10, or 14 minutes), the chewed sample is removed from the Brabender head carefully. Chewed samples are to be dried by placing on a weighing dish for 2-3 minutes at room temperature.

Once the time interval of mechanical chewing has been achieved, about 50 grams of the chewed sample (1) is placed on the surface of a laminated graph paper (Crystine Cover Gloss White 14 PT 8-1/2x 11 Grain Short 150/ Ream) held in a Smear Test Apparatus. The Smear Test Apparatus (5) as illustrated in Figures 11A (top view), 11B (front view), and 11C (side view) includes a base plate (10) having a test paper catch (20) that firmly holds the laminated paper (not shown in the figures) on the surface of the base plate (10). Connected to the base plate (10) is a left rail (30a) and a right rail (30b). Each rail has a groove the length of the rail where the base plate fits in placing the base plate at an angle which slopes down toward the test paper catch (20). A slide (40) is attached to a left slide bearing (50a) and a right slide bearing (50b) allowing the slide (40) to sit atop and span the width of the Apparatus (5). The slide (40) has a slide blade (100) on the bottom side, the slide blade (100) having a generally triangular shape with the thinnest point of about 1 mm thick (Figure 12A, 100). Figure 12A is a bottom view of the slide (40) where the side with the slide blade (100) point is placed nearest to the test paper catch (20) and the side with the largest part of the gap towards the chewed sample (1). The slide (40) can be slid over the top of the rails and the angle of the groove in the rails results in a gap between the bottom of the slide (40) and the top of the base plate (10) of about 3 mm nearest the test paper catch (20) and a gap reaching about 0 mm at the end furthest from the test paper catch (20). Left (60a) and right handles (60b) attached to the slide (40) allows for an operator to draw the slide (40) over the chewed sample (1) by applying a sufficient downward and forward sliding force to smear a 50 gram quantity of chewed sample (1) across the surface of the laminated paper to achieve a smeared sample (not shown in Figure) having a length of 18 cm, a thickness of about 6 mm at the end closest to the start of the smear (closest to the test paper catch (20)) and a thickness of about 2 mm at the end furthest from the start of the smear (furthest from the test paper catch (20)). The time it takes to smear the sample is about 4-5 seconds. Figure 11A illustrates the direction of the draw. The smeared sample on the paper and the paper are removed from the test apparatus together and the smeared sample is analyzed for the presence of particulates and discontinuities. General dimensions of the Smear Test Apparatus (5) are summarized in Table 31.

**Table 31.**

| **Part** | **Dimension** |
|---|---|
| Base Plate (10) | Length 12 inches; width 9 inches; thickness 0.5 inches |
| Left Rail (30a) | Length 12 inches; Groove dimensions in Figure 13 in inches |
| Right Rail (30b) | Length 12 inches; Groove dimensions similar to Figure 13, mirror image |
| Slide (40) | Length 11.25 inches, Width 1.475 inches; |
| Slide blade (100) | Height 0.961 inch, angle 19 degrees (Figure 12B) |

Cohesiveness of the spread samples are then determined from the smear test. "Cohesiveness" is defined as how well a mass of material will stick to itself without falling apart. In some of the multi-textured chewing gum products, there is a chewing gum composition portion and a hard candy or caramel as the confectionery composition portion. When these products are initially chewed, the product mass tends to fall apart, that is it is less cohesive.

A summary of the data for the smear test is provided in the Table 32 below. "Discontinuities" means a hole in the smeared sample that is at least .05 inches (12.7 millimeters) long measured in one direction. "Particulates" means the presence of particulate matter in the sample having a longest dimension of greater than 2 mm. The particulates can be measured using a caliper. As shown in the data, the mechanically chewed samples of multi-textural product exhibits less cohesion than the comparative chewing gum.

**Table 32.**

| **Sample** | **Cookie Dough** | **Indulgent Orange Cream** | **Candy bar** | **Breakables** | **C1** | **C2** | **C3** | **C4** |
|---|---|---|---|---|---|---|---|---|
| Discontinuities after 10 min | yes | no | yes | yes | no | no | no | no |
| Discontinuities after 14 min | yes | no | yes | yes | no | no | no | no |
| Particulates > 2mm after 6 min | yes | yes | yes | yes | no | no | no | no |
| Particulates > 2mm diameter after 10 min | yes | no | yes | yes | no | no | no | no |

As the multi-textured chewing gum products such as cookie dough, candy bar and breakables contained discontinuities after 10 and 14 minutes as opposed to the comparative samples, it has been established that there is still a multi-textural effect even at later stages of chewing. Such a multi-textural effect leads to a more dynamic and interesting chew experience for the consumer.

As used herein the terms "comprising" (also "comprises," etc.), "having," and "including" is inclusive (open-ended) and does not exclude additional, unrecited elements or method steps. The singular forms "a," "an," and "the" include plural referents unless the context clearly dictates otherwise. The endpoints of all ranges directed to the same characteristic or component are independently combinable, and inclusive of the recited endpoint. The term "a combination thereof' is inclusive two or more components of the list. The term "homogeneous" refers to a uniform blend of the components. The terms "first," and "second,", "primary," and "secondary,", as used herein do not denote any order, quantity, or importance, but rather are used to distinguish one element from another.

## Claims

1. A multi-textured chewing gum product, comprising:
a chewing gum composition portion and a confectionery composition portion where a region of the chewing gum composition portion is exposed;
the multi-textured chewing gum product has an initial crunch characteristic determined by a Texture Analyzer Test where there are at least three changes in slope direction in a stress versus probe penetration (%) curve and at least one negative slope that covers a stress range of at least 1, at least 1.5, at least 2, or at least 2.5 million pascals;
wherein the Texture Analyzer Test provides results as stress versus probe penetration (%); and wherein:
the chewing gum composition comprises 10.0 to 55.0 wt% gum base, 35.0 to 75.0 wt% sugar polyol bulk sweetener, and 2.0 to 15.0 wt% softener based on the total weight of the chewing gum composition, and
the confectionery composition portion comprises 70.0 to 95.0 wt% bulk sweetener, 3.0 to 14.0 wt% fat, and 2.0 to 14.0 wt% dairy ingredient based on the total weight of the confectionery composition.

2. The multi-textured chewing gum product of claim 1, wherein the product of a) is in bar or stick format comprising a base layer of confectionery composition (substrate) and one, two or three portions of chewing gum composition positioned on a top surface of the base layer; or
a base layer of chewing gum composition (substrate) and one, two or three portions of confectionery composition positioned on a top surface of the base layer.

3. The multi-textured chewing gum product of claim 1 or 2, further comprising a second confectionery composition portion partially covering the confectionery composition portion or the chewing gum composition portion.

4. The multi-textured chewing gum product of claim 3, wherein the second confectionery composition is in the form of a drizzle or glaze.

5. The multi-textured chewing gum product of claim 1, comprising:
a first confectionery composition portion, a chewing gum composition portion positioned on a top surface of the first confectionery composition portion, and a second confectionery composition portion in the form of a drizzle over a top surface of the chewing gum composition portion, wherein the multi-textured chewing gum product is in a bar or stick format;
wherein the chewing gum composition comprises 10.0 to 55.0 wt% gum base, 35.0 to 75.0 wt% sugar polyol bulk sweetener, and 2.0 to 15.0 wt% softener based on the total weight of the chewing gum composition;
the first confectionery composition comprises 70.0 to 95.0 wt% bulk sweetener, 3.0 to 14.0 wt% fat, and 2.0 to 14.0 wt% dairy ingredient based on the total weight of the first confectionery composition;
the multi-textured chewing gum product has a weight ratio of chewing gum composition to first confectionery composition of 40:60 to 60:40; and
wherein the first confectionery composition portion fractures when the multi-textured chewing gum product is bent 90 degrees.

## Patentansprüche

1. Mehrstrukturiertes Kaugummiprodukt, umfassend:
einen Kaugummizusammensetzungsteil und einen Süßwarenzusammensetzungsteil, wobei ein Bereich des Kaugummizusammensetzungsteils freiliegt;
das mehrstrukturierte Kaugummiprodukt hat eine durch einen Strukturanalysetest ermittelte anfängliche Crunch-Eigenschaft mit mindestens drei Änderungen der Neigungsrichtung in einer Kurve der Spannung zur Sondendurchdringung (%) und mindestens einer negativen Neigung, die einen Spannungsbereich von mindestens 1, mindestens 1,5, mindestens 2 oder mindestens 2,5 Millionen Pascal abdeckt;
wobei der Strukturanalysetest Ergebnisse als Spannung zur Sondendurchdringung (%) liefert; und wobei:
die Kaugummizusammensetzung zu 10,0 bis 55,0 Gew.-% Gummigrundmasse, zu 35,0 bis 75,0 Gew.-% Zuckerpolyol-Massensüßungsmittel und zu 2,0 bis 15,0 Gew.-% Weichmacher, bezogen auf das Gesamtgewicht der Kaugummizusammensetzung, umfasst und
der Süßwarenzusammensetzungsteil zu 70,0 bis 95,0 Gew.-% Massensüßungsmittel, zu 3,0 bis 14,0 Gew.-% Fett und zu 2,0 bis 14,0 Gew.-% Milchbestandteil, bezogen auf das Gesamtgewicht der Süßwarenzusammensetzung, umfasst.

2. Mehrstrukturiertes Kaugummiprodukt nach Anspruch 1, wobei das Produkt von a) im Stangen- oder Stabformat vorliegt, umfassend eine Basisschicht aus Süßwarenzusammensetzung (Substrat) und ein, zwei oder drei Teile Kaugummizusammensetzung, positioniert auf einer oberen Oberfläche der Basisschicht; oder
eine Basisschicht aus Kaugummizusammensetzung (Substrat) und ein, zwei oder drei Teile Süßwarenzusammensetzung, positioniert auf einer oberen Oberfläche der Basisschicht.

3. Mehrstrukturiertes Kaugummiprodukt nach Anspruch 1 oder 2, ferner umfassend einen zweiten Süßwarenzusammensetzungsteil, der den Süßwarenzusammensetzungsteil oder den Kaugummizusammensetzungsteil teilweise bedeckt.

4. Mehrstrukturiertes Kaugummiprodukt nach Anspruch 3, wobei die zweite Süßwarenzusammensetzung in Form von Sprühnebel oder Glasur vorliegt.

5. Mehrstrukturiertes Kaugummiprodukt nach Anspruch 1, umfassend:
einen ersten Süßwarenzusammensetzungsteil, einen Kaugummizusammensetzungsteil, der auf einer oberen Oberfläche des ersten Süßwarenzusammensetzungsteils positioniert ist, und einen zweiten Süßwarenzusammensetzungsteil in Form von Sprühnebel über eine obere Oberfläche des Kaugummizusammensetzungsteils, wobei das mehrstrukturierte Kaugummiprodukt ein Stangen- oder Stabformat hat;
wobei die Kaugummizusammensetzung zu 10,0 bis 55,0 Gew.-% Gummigrundmasse, zu 35,0 bis 75,0 Gew.-% Zuckerpolyol-Massensüßungsmittel und zu 2,0 bis 15,0 Gew.-% Weichmacher, bezogen auf das Gesamtgewicht der Kaugummizusammensetzung, umfasst;
die erste Süßwarenzusammensetzung zu 70,0 bis 95,0 Gew.-% Massensüßungsmittel, zu 3,0 bis 14,0 Gew.-% Fett und zu 2,0 bis 14,0 Gew.-% Milchbestandteil, bezogen auf das Gesamtgewicht der Süßwarenzusammensetzung, umfasst;
das mehrstrukturierte Kaugummiprodukt ein Gewichtsverhältnis der Kaugummizusammensetzung zur ersten Süßwarenzusammensetzung von 40:60 bis 60:40 hat; und
wobei der erste Süßwarenzusammensetzungsteil bricht, wenn das mehrstrukturierte Kaugummiprodukt um 90 Grad gebogen wird.

## Revendications

1. Produit de chewing-gum à textures multiples, comprenant :
une partie composition de chewing-gum et une partie composition de confiserie où une région de la partie composition de chewing-gum est exposée ;
le produit de chewing-gum à textures multiples a une caractéristique croquante initiale déterminée par un test d'analyseur de texture où il y a au moins trois changements de direction de pente dans une courbe de contrainte en fonction de pénétration de sonde (%) et au moins une pente négative qui couvre une plage de contrainte d'au moins 1, au moins 1,5, au moins 2, ou au moins 2,5 millions de Pascals ;
dans lequel le test d'analyseur de texture fournit des résultats sous forme de contrainte en fonction de pénétration de sonde (%) ; et dans lequel :
la composition de chewing-gum comprend 10,0 à 55,0 % en poids de base de gomme, 35,0 à 75,0 % en poids d'édulcorant de charge polyol de sucre, et 2,0 à 15,0 % en poids d'agent de ramollissement sur la base du poids total de la composition de chewing-gum, et
la partie composition de confiserie comprend 70,0 à 95,0 % en poids d'édulcorant de charge, 3,0 à 14,0 % en poids de matière grasse, et 2,0 à 14,0 % en poids d'ingrédient laitier sur la base du poids total de la composition de confiserie.

2. Produit de chewing-gum à textures multiples selon la revendication 1, dans lequel le produit de a) est sous forme de barre ou de bâton comprenant une couche de base de composition de confiserie (substrat) et une, deux ou trois parties de composition de chewing-gum positionnées sur une surface supérieure de la couche de base ; ou
une couche de base de composition de chewing-gum (substrat) et une, deux ou trois parties de composition de confiserie positionnées sur une surface supérieure de la couche de base.

3. Produit de chewing-gum à textures multiples selon la revendication 1 ou 2, comprenant en outre une deuxième partie composition de confiserie couvrant partiellement la partie composition de confiserie ou la partie composition de chewing-gum.

4. Produit de chewing-gum à textures multiples selon la revendication 3, dans lequel la deuxième composition de confiserie se présente sous la forme d'un nappage ou glaçage.

5. Produit de chewing-gum à textures multiples selon la revendication 1, comprenant :
une partie première composition de confiserie, une partie composition de chewing-gum positionnée sur une surface supérieure de la partie première composition de confiserie, et une partie deuxième composition de confiserie sous la forme d'un nappage par-dessus une surface supérieure de la partie composition de chewing-gum, dans lequel le produit de chewing-gum à textures multiples est sous une forme de barre ou de bâton ;
dans lequel la composition de chewing-gum comprend 10,0 à 55,0 % en poids de base de gomme, 35,0 à 75,0 % en poids d'édulcorant de charge polyol de sucre, et 2,0 à 15,0 % en poids d'agent de ramollissement sur la base du poids total de la composition de chewing-gum ;
la partie première composition de confiserie comprend 70,0 à 95,0 % en poids d'édulcorant de charge, 3,0 à 14,0 % en poids de matière grasse, et 2,0 à 14,0 % en poids d'ingrédient laitier sur la base du poids total de la première composition de confiserie ;
le produit de chewing-gum à textures multiples a un rapport pondéral de la composition de chewing-gum à la première composition de confiserie de 40:60 à 60:40 ; et
dans lequel la partie première composition de confiserie se rompt lorsque le produit de chewing-gum à textures multiples est plié à 90 degrés.
